(19) **Europäisches Patentamt / European Patent Office / Office européen des brevets**

(11) **EP 4 488 704 A1**

(12) **EUROPEAN PATENT APPLICATION**
published in accordance with Art. 153(4) EPC

(43) Date of publication:
**08.01.2025 Bulletin 2025/02**

(21) Application number: **23777900.4**

(22) Date of filing: **20.03.2023**

(51) International Patent Classification (IPC):
***G01S 3/00*** (2006.01)

(52) Cooperative Patent Classification (CPC):
**G01S 3/00**

(86) International application number:
**PCT/CN2023/082522**

(87) International publication number:
**WO 2023/185526 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.03.2022 CN 202210309358**
**20.04.2022 CN 202210417185**

(71) Applicant: **Huawei Technologies Co., Ltd.**
**Shenzhen, Guangdong 518129 (CN)**

(72) Inventors:
• **WU, Haibing**
**Shenzhen, Guangdong 518129 (CN)**
• **LI, Xueru**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **COMMUNICATION METHOD AND COMMUNICATION APPARATUS**

(57) A communication method (500) is provided. The communication method (500) includes: A first device sends at least three reference signals (S501). A terminal device receives the reference signals, and determines first information based on phase measurement results of the reference signals. The terminal device sends the first information (S502), where the first information indicates a direction angle. The first device receives the first informa- tion. Because at least two of the at least three reference signals are sent or received by using a same antenna, the terminal device or another device can compensate for a phase error caused by a frequency shift based on the first information, to improve angle measurement precision. A communication apparatus, a chip, and a computer-read- able storage medium are further provided.

500

FIG. 5

EP 4 488 704 A1

**Description**

This application claims priority to Chinese Patent Application No. 202210309358.7, filed with the China National Intellectual Property Administration on March 27, 2022 and entitled "ANGLE MEASUREMENT METHOD", and claims priority to Chinese Patent Application No. 202210417185.0, filed with the China National Intellectual Property Administration on April 20, 2022 and entitled "COMMUNICATION METHOD AND COMMUNICATION APPARATUS", both of which are incorporated herein by reference in their entireties.

**TECHNICAL FIELD**

Embodiments of this application relate to the communication field, and more specifically, to a communication method and a communication apparatus.

**BACKGROUND**

Angle measurement is an important basic function in cellular and sidelink (sidelink) positioning scenarios in new radio (new radio, NR). However, due to a limitation of a hardware condition of a device or the like, when a receive end device has a plurality of antennas, the receive end device needs to receive a plurality of reference signals in an antenna switching manner, and measures phases in a time division manner; or when a transmit end device has a plurality of antennas, the transmit end device sends reference signals in an antenna switching manner, and the receive end device measures phases in a time division manner.

In this case, there may be inconsistency between signal frequencies of the receive end device and the transmit end device (in other words, there is a signal frequency shift). As a result, an obtained phase measurement result includes a phase error caused by the signal frequency shift, resulting in a large error occurs in an angle measurement result.

**SUMMARY**

Embodiments of this application provide a communication method and a communication apparatus, to reduce an angle measurement error and improve angle measurement precision.

According to a first aspect, a communication method is provided. The method is applied to a terminal device and includes: receiving a first reference signal, a second reference signal, and a third reference signal; and sending first information, where the first information indicates a direction angle, and the first information is determined based on phase measurement results of the first reference signal, the second reference signal, and the third reference signal. The first reference signal and the third reference signal are received by using a first antenna, the second reference signal is received by using a second antenna, and the first antenna and the second antenna are different antennas of the terminal device; or the first reference signal and the third reference signal are sent by using a third antenna, the second reference signal is sent by using a fourth antenna, and the third antenna and the fourth antenna are different antennas of a first device.

Based on the foregoing technical solution, the terminal device receives the first reference signal, the second reference signal, and the third reference signal, and sends the first information indicating the direction angle, so that another device can obtain the direction angle based on the first information. The first reference signal and the third reference signal are sent or received by using a same antenna, the second reference signal is sent or received by using another antenna, and the first information is determined based on the phase measurement results of the first reference signal, the second reference signal, and the third reference signal. Therefore, the terminal device or the another device can compensate for a phase error caused by a frequency shift based on the first information, to improve angle measurement precision.

With reference to the first aspect, in some implementations of the first aspect, the first information includes phase information, and the phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the first information sent by the terminal device includes the phase information, and the phase information indicates phase information of reference signals sent by using a same antenna and phase information of reference signals sent by using different antennas, so that another device can compensate for a phase error caused by a frequency shift based on the phase information, to improve angle measurement precision.

With reference to the first aspect, in some implementations of the first aspect, the first information further includes time information, and the time information indicates the first moment corresponding to the first phase, the second moment corresponding to the second phase, and the third moment corresponding to the third phase.

Based on the foregoing technical solution, the first information sent by the terminal device includes the phase information and the time information. The phase information indicates phase information of reference signals sent by using a same antenna and phase information of reference signals sent by using different antennas, and the time information indicates measurement time corresponding to the phase information, so that another device can compensate for a phase error caused by a frequency shift based on the phase information and the time information, to improve angle measurement precision.

With reference to the first aspect, in some implementations of the first aspect, the first information includes phase difference information, and the phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the first information sent by the terminal device includes the phase difference information. The phase difference information may indicate phase difference information of reference signals sent by using a same antenna and phase difference information of reference signals sent by using different antennas, so that another device can compensate for a phase error caused by a frequency shift based on the phase difference information, to improve angle measurement precision.

With reference to the first aspect, in some implementations of the first aspect, the first information further includes time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The first time difference is a difference between the first moment and the second moment, the second time difference is a difference between the first moment and the third moment, and the third time difference is a difference between the second moment and the third moment.

Based on the foregoing technical solution, the first information sent by the terminal device includes the phase difference information and the time difference information. The phase difference information may indicate phase difference information of reference signals sent by using a same antenna and phase difference information of reference signals sent by using different antennas, so that another device can compensate for a phase error caused by a frequency shift based on the phase difference information and the time difference information corresponding to the phase difference information, to improve angle measurement precision.

With reference to the first aspect, in some implementations of the first aspect, the first information further includes frequency shift information, and the frequency shift information indicates a difference between a signal frequency of the terminal device and each of frequencies of the first reference signal, the second reference signal, and the third reference signal that are received by the terminal device.

Based on the foregoing technical solution, the first information sent by the terminal device may further include the frequency shift information. In other words, the terminal device can compensate for a phase error caused by a frequency shift, and send the frequency shift information to another device, so that the another device can improve angle measurement precision based on the frequency shift information.

With reference to the first aspect, in some implementations of the first aspect, the first information includes compensated phase information and compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is a phase obtained by compensating the first phase based on the phase measurement result of the first reference signal and the phase measurement result of the third reference signal. The compensated second phase is a phase obtained by compensating the second phase based on the phase measurement result of the first reference signal and the phase measurement result of the third reference signal. The compensated third phase is a phase obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

Based on the foregoing technical solution, the first information sent by the terminal device includes the compensated phase information or the compensated phase difference information, and the compensated phase information or the compensated phase difference information is obtained by performing frequency shift compensation on phase information or phase difference information. In other words, impact of a frequency shift on angle measurement has been considered in the first information sent by the terminal device, so that another device can determine a direction angle with higher precision based on the compensated phase information or the compensated phase difference information, to improve angle measurement precision.

With reference to the first aspect, in some implementations of the first aspect, the first information includes a direction angle, the direction angle is an angle of arrival or an angle of departure, and the direction angle is determined based on phase information. The phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the terminal device may determine the direction angle based on the phase information, and the phase information indicates phase information of reference signals sent by using a same antenna and phase information of reference signals sent by using different antennas. Therefore, an angle measurement error caused by a frequency shift is considered for the direction angle determined by the terminal device based on the phase information, so that the direction angle obtained through calculation has higher precision, that is, angle measurement precision can be improved.

With reference to the first aspect, in some implementations of the first aspect, the first information includes a direction angle, the direction angle is an angle of arrival or an angle of departure, and the direction angle is determined based on phase information and time information. The phase information indicates a first phase, a second phase, and a third phase. The time information indicates a first moment corresponding to the first phase, a second moment corresponding to the second phase, and a third moment corresponding to the third phase. The first phase is a phase that is of the first reference signal and that is obtained at the first moment, the second phase is a phase that is of the second reference signal and that is obtained at the second moment, and the third phase is a phase that is of the third reference signal and that is obtained at the third moment.

Based on the foregoing technical solution, the terminal device may determine the direction angle based on the phase information and the time information. The phase information indicates phase information of reference signals sent by using a same antenna and phase information of reference signals sent by using different antennas. The time information indicates measurement time corresponding to the phase information. Therefore, an angle measurement error caused by a frequency shift is considered for the direction angle determined by the terminal device based on the phase information and the time information, so that the direction angle obtained through calculation has higher precision, that is, angle measurement precision can be improved.

With reference to the first aspect, in some implementations of the first aspect, the first information includes a direction angle, the direction angle is an angle of arrival or an angle of departure, and the direction angle is determined based on phase difference information. The phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the terminal device may determine the direction angle based on the phase difference information, and the phase difference information indicates phase difference information of reference signals sent by using a same antenna and phase difference information of reference signals sent by using different antennas. Therefore, an angle measurement error caused by a frequency shift is considered for the direction angle determined by the terminal device based on the phase difference information, so that the direction angle obtained through calculation has higher precision, that is, angle measurement precision can be improved.

With reference to the first aspect, in some implementations of the first aspect, the first information includes a direction angle, the direction angle is an angle of arrival or an angle of departure, and the direction angle is determined based on phase difference information and time difference information. The phase difference information indicates at least one of the following: a first phase difference and a second phase difference, the first phase difference and a third phase difference, and the second phase difference and the third phase difference. The time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference.

The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The first time difference is a difference between the first moment and the second moment, the second time difference is a difference between the first moment and the third moment, and the third time difference is a difference between the second moment and the third moment.

Based on the foregoing technical solution, the terminal device may determine the direction angle based on the phase difference information and the time difference information. The phase difference information indicates phase difference information of reference signals sent by using a same antenna and phase difference information of reference signals sent by using different antennas. The time difference information indicates a measurement time interval corresponding to the phase difference information. Therefore, an angle measurement error caused by a frequency shift is considered for the direction angle determined by the terminal device based on the phase difference information and the time difference information, so that the direction angle obtained through calculation has higher precision, that is, angle measurement precision can be improved.

With reference to the first aspect, in some implementations of the first aspect, the first information includes a direction angle, the direction angle is an angle of arrival or an angle of departure, and the direction angle is determined based on phase information and frequency shift information. The phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The frequency shift information indicates a difference between a signal frequency of the terminal device and each of frequencies of the first reference signal, the second reference signal, and the third reference signal that are received by the terminal device.

With reference to the first aspect, in some implementations of the first aspect, the first information includes a direction angle, the direction angle is an angle of arrival or an angle of departure, and the direction angle is determined based on phase information, time information, and frequency shift information. The phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The time information indicates the first moment corresponding to the first phase, the second moment corresponding to the second phase, and the third moment corresponding to the third phase. The frequency shift information indicates a difference between a signal frequency of the terminal device and each of frequencies of the first reference signal, the second reference signal, and the third reference signal that are received by the terminal device.

With reference to the first aspect, in some implementations of the first aspect, the first information includes a direction angle, the direction angle is an angle of arrival or an angle of departure, and the direction angle is determined based on phase difference information and frequency shift information. The phase difference information indicates at least one of the following: a first phase difference and a second phase difference, the first phase difference and a third phase difference, and the second phase difference and the third phase difference. The frequency shift information indicates a difference between a signal frequency of the terminal device and each of frequencies of the first reference signal, the second reference signal, and the third reference signal that are received by the terminal device. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the first aspect, in some implementations of the first aspect, the first information includes a direction angle, the direction angle is an angle of arrival or an angle of departure, and the direction angle is determined based on phase difference information, time difference information, and frequency shift information. The phase difference information indicates at least one of the following: a first phase difference and a second phase difference, the first phase difference and a third phase difference, and the second phase difference and the third phase difference. The time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The frequency shift information indicates a difference between a signal frequency of the terminal device and each of frequencies of the first reference signal, the second reference signal, and the third reference signal that are received by the terminal device.

The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The first time difference is a difference between the first moment and the second moment, the second time difference is a difference between the first moment and the third moment, and the third time difference is a difference between the second moment and the third moment.

Based on the foregoing technical solution, the terminal device considers the frequency shift information when determining the direction angle. In other words, the terminal device considers a phase error caused by a frequency shift when determining the direction angle, so that the direction angle obtained by the terminal device through calculation has higher precision, that is, angle measurement precision can be improved.

With reference to the first aspect, in some implementations of the first aspect, the first information includes a direction angle, the direction angle is an angle of arrival or an angle of departure, and the direction angle is determined based on compensated phase information or compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is a phase obtained by compensating the first phase based on the phase measurement result of the first reference signal and the phase measurement result of the third reference signal. The compensated second phase is a phase obtained by compensating the second phase based on the phase measurement result of the first reference signal and the phase measurement result of the third reference signal. The compensated third phase is a phase obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

It should be understood that a granularity of the time information and/or the time difference information is any one of the following: a sub-nanosecond, a nanosecond, a microsecond, symbol duration, slot duration, an LTE basic time unit, an NR basic time unit, and a baseband sampling time interval.

Based on the foregoing technical solution, the terminal device may determine the direction angle based on the compensated phase information or the compensated phase difference information, and the compensated phase information or the compensated phase difference information is obtained by performing frequency shift compensation on phase information or phase difference information. In other words, the terminal device considers a phase error caused by a frequency shift when determining the direction angle, so that the direction angle obtained by the terminal device through calculation has higher precision, that is, angle measurement precision can be improved.

According to a second aspect, a communication method is provided. The method is applied to a first device and includes: receiving first information, where the first information indicates a direction angle, and the first information is determined based on phase measurement results of a first reference signal, a second reference signal, and a third reference signal; and determining the direction angle based on the first information, where the first reference signal and the third reference signal are sent by using a third antenna, the second reference signal is sent by using a fourth antenna, and the third antenna and the fourth antenna are different antennas of the first device; or the first reference signal and the third reference signal are received by using a first antenna, the second reference signal is received by using a second antenna, and the first antenna and the second antenna are different antennas of a terminal device.

It should be understood that the first device may be an access network device, a terminal device, or a road side unit.

Based on the foregoing technical solution, the first device may determine the direction angle based on the first information sent by the terminal device. The first information is determined based on the phase measurement results of the first reference signal, the second reference signal, and the third reference signal, and both phase measurement results of reference signals sent by using a same antenna and phase measurement results of reference signals sent by using different antennas are considered in the first information. Therefore, a phase error caused by a frequency shift is also considered for the direction angle determined by the first device based on the first information, so that the direction angle obtained by the first device through calculation has higher precision, that is, angle measurement precision can be improved.

With reference to the second aspect, in some implementations of the second aspect, before the receiving first information, the method further includes: sending the first reference signal, the second reference signal, and the third reference signal.

With reference to the second aspect, in some implementations of the second aspect, the first information includes phase information, and the phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the first information received by the first device includes the phase information, and the phase information indicates phase information of reference signals sent by using a same antenna and phase information of reference signals sent by using different antennas. Therefore, a phase error caused by a frequency shift is considered for the direction angle determined by the first device based on the phase information, so that the direction angle obtained through calculation has higher precision, that is, angle measurement precision can be improved.

With reference to the second aspect, in some implementations of the second aspect, the first information further includes time information, and the time information indicates the first moment corresponding to the first phase, the second moment corresponding to the second phase, and the third moment corresponding to the third phase.

Based on the foregoing technical solution, the first information received by the first device includes the phase information and the time information. The phase information indicates phase information of reference signals sent by using a same antenna and phase information of reference signals sent by using different antennas. The time information indicates measurement time corresponding to the phase information. Therefore, a phase error caused by a frequency shift is considered for the direction angle determined by the first device based on the phase information and the time information, so that the direction angle obtained through calculation has higher precision, that is, angle measurement precision can be improved.

With reference to the second aspect, in some implementations of the second aspect, the first information includes phase difference information, and the phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the first information received by the first device includes phase difference information, and the phase difference information indicates a phase difference between reference signals sent by using a same antenna and a phase difference between reference signals sent by using different antennas. Therefore, a phase error caused by a frequency shift is considered for the direction angle determined by the first device based on the phase difference information, so that the direction angle obtained through calculation has higher precision, that is, angle measurement precision can be improved.

With reference to the second aspect, in some implementations of the second aspect, the first information further includes time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The first time difference is a difference between the first moment and the second moment, the second time difference is a difference between the first moment and the third moment, and the third time difference is a difference between the second moment and the third moment.

Based on the foregoing technical solution, the first information received by the first device includes the phase difference information and the time difference information. The phase difference information indicates the phase difference between the reference signals sent by using the same antenna and the phase difference between the reference signals sent by using different antennas. The time difference information indicates a measurement time interval corresponding to the phase difference information. Therefore, the phase error caused by the frequency shift is considered for the direction angle determined by the first device based on the phase difference information and the time difference information, so that the direction angle obtained through calculation has higher precision, that is, angle measurement precision can be improved.

With reference to the second aspect, in some implementations of the second aspect, the first information further includes frequency shift information, and the frequency shift information indicates a difference between a signal frequency of the terminal device and each of frequencies of the first reference signal, the second reference signal, and the third reference signal that are received by the terminal device.

Based on the foregoing technical solution, the first device considers the frequency shift information when determining the direction angle. In other words, the first device considers a phase error caused by a frequency shift when determining the direction angle, so that the direction angle obtained by the first device through calculation has higher precision, that is, angle measurement precision can be improved.

With reference to the second aspect, in some implementations of the second aspect, the first information includes compensated phase information and compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is a phase obtained by compensating the first phase based on the phase measurement result of the first reference signal and the phase measurement result of the third reference signal. The compensated second phase is a phase obtained by compensating the second phase based on the phase measurement result of the first reference signal and the phase measurement result of the third reference signal. The compensated third phase is a phase obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

It should be understood that a granularity of the time information and/or the time difference information is any one of the following: a sub-nanosecond, a nanosecond, a microsecond, symbol duration, slot duration, an LTE basic time unit, an NR basic time unit, and a baseband sampling time interval.

Based on the foregoing technical solution, the first device may determine the direction angle based on the compensated phase information or the compensated phase difference information, and the compensated phase information or the compensated phase difference information is obtained by performing frequency shift compensation on phase information or phase difference information. In other words, the first device considers a phase error caused by a frequency shift when determining the direction angle, so that the direction angle obtained by the terminal device through calculation has higher precision, that is, angle measurement precision can be improved.

According to a third aspect, a communication method is provided. The method is applied to a second device and includes: receiving first information, where the first information indicates a direction angle, and the first information is determined based on phase measurement results of a first reference signal, a second reference signal, and a third reference signal; and determining the direction angle based on the first information, where the first reference signal and the third reference signal are sent by using a third antenna, the second reference signal is sent by using a fourth antenna, and the third antenna and the fourth antenna are different antennas of a first device; or the first reference signal and the third reference signal are received by using a first antenna, the second reference signal is received by using a second antenna, and the first antenna and the second antenna are different antennas of a terminal device.

It should be understood that the second device may be a positioning management device.

Based on the foregoing technical solution, the second device may determine the direction angle based on the first information sent by the terminal device. The first information is determined based on the phase measurement results of the first reference signal, the second reference signal, and the third reference signal, and both phase measurement results of reference signals sent by using a same antenna and phase measurement results of reference signals sent by using different antennas are considered in the first information. Therefore, a phase error caused by a frequency shift is also considered for the direction angle determined by the second device based on the first information, so that the direction angle obtained by the second device through calculation has higher precision, that is, angle measurement precision can be improved.

With reference to the third aspect, in some implementations of the third aspect, the first information includes phase information, and the phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the first information received by the second device includes the phase information, and the phase information indicates phase information of reference signals sent by using a same antenna and phase information of reference signals sent by using different antennas. Therefore, a phase error caused by a frequency shift is considered for the direction angle determined by the second device based on the phase information, so that the direction angle obtained through calculation has higher precision, that is, angle measurement precision can be improved.

With reference to the third aspect, in some implementations of the third aspect, the first information further includes time information, and the time information indicates the first moment corresponding to the first phase, the second moment corresponding to the second phase, and the third moment corresponding to the third phase.

Based on the foregoing technical solution, the first information received by the second device includes phase information and time information. The phase information indicates phase information of reference signals sent by using a same antenna and phase information of reference signals sent by using different antennas. The time information indicates measurement time corresponding to the phase information. Therefore, a phase error caused by a frequency shift is considered for the direction angle determined by the second device based on the phase information and the time information, so that the direction angle obtained through calculation has higher precision, that is, angle measurement precision can be improved.

With reference to the third aspect, in some implementations of the third aspect, the first information includes phase difference information, and the phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

Based on the foregoing technical solution, the first information received by the second device includes the phase difference information, and the phase difference information indicates a phase difference between reference signals sent by using a same antenna and a phase difference between reference signals sent by using different antennas. Therefore, a phase error caused by a frequency shift is considered for the direction angle determined by the second device based on the phase difference information, so that the direction angle obtained through calculation has higher precision, that is, angle measurement precision can be improved.

With reference to the third aspect, in some implementations of the third aspect, the first information further includes time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The first time difference is a difference between the first moment and the second moment, the second time difference is a difference between the first moment and the third moment, and the third time difference is a difference between the second moment and the third moment.

Based on the foregoing technical solution, the first information received by the second device includes the phase difference information and the time difference information. The phase difference information indicates the phase difference between the reference signals sent by using the same antenna and the phase difference between the reference signals sent by using different antennas. The time difference information indicates a measurement time interval corresponding to the phase difference information. Therefore, the phase error caused by the frequency shift is considered for the direction angle determined by the second device based on the phase difference information and the time difference information, so that the direction angle obtained through calculation has higher precision, that is, angle measurement precision can be improved.

With reference to the third aspect, in some implementations of the third aspect, the first information further includes frequency shift information, and the frequency shift information indicates a difference between a signal frequency of the terminal device and each of frequencies of the first reference signal, the second reference signal, and the third reference signal that are received by the terminal device.

Based on the foregoing technical solution, the second device considers the frequency shift information when determining the direction angle. In other words, the second device considers a phase error caused by a frequency shift when determining the direction angle, so that the direction angle obtained by the second device through calculation has higher precision, that is, angle measurement precision can be improved.

With reference to the third aspect, in some implementations of the third aspect, the first information includes compensated phase information and compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is a phase obtained by compensating the first phase based on the phase measurement result of the first reference signal and the phase measurement result of the third reference signal. The compensated second phase is a phase obtained by compensating the second phase based on the phase measurement result of the first reference signal and the phase measurement result of the third reference signal. The compensated third phase is a phase obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

It should be understood that a granularity of the time information and/or the time difference information is any one of the following: a sub-nanosecond, a nanosecond, a microsecond, symbol duration, slot duration, an LTE basic time unit, an NR basic time unit, and a baseband sampling time interval.

Based on the foregoing technical solution, the second device may determine the direction angle based on the compensated phase information or the compensated phase difference information, and the compensated phase information or the compensated phase difference information is obtained by performing frequency shift compensation on phase information or phase difference information. In other words, the second device considers a phase error caused by a frequency shift when determining the direction angle, so that the direction angle obtained by the terminal device through calculation has higher precision, that is, angle measurement precision can be improved.

According to a fourth aspect, a communication apparatus is provided, including a receiving unit and a sending unit. The receiving unit is configured to receive a first reference signal, a second reference signal, and a third reference signal. The sending unit is configured to send first information, where the first information indicates a direction angle, and the first information is determined based on phase measurement results of the first reference signal, the second reference signal, and the third reference signal. The first reference signal and the third reference signal are received by using a first antenna, the second reference signal is received by using a second antenna, and the first antenna and the second antenna are different antennas of a terminal device; or the first reference signal and the third reference signal are sent by using a third antenna, the second reference signal is sent by using a fourth antenna, and the third antenna and the fourth antenna are different antennas of a first device.

With reference to the fourth aspect, in some implementations of the fourth aspect, the first information includes phase information, and the phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the fourth aspect, in some implementations of the fourth aspect, the first information further includes time information, the time information indicates the first moment corresponding to the first phase, the second moment corresponding to the second phase, and the third moment corresponding to the third phase.

With reference to the fourth aspect, in some implementations of the fourth aspect, the first information includes phase difference information, and the phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the fourth aspect, in some implementations of the fourth aspect, the first information further includes time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The first time difference is a difference between the first moment and the second moment, the second time difference is a difference between the first moment and the third moment, and the third time difference is a difference between the second moment and the third moment.

With reference to the fourth aspect, in some implementations of the fourth aspect, the first information further includes frequency shift information, and the frequency shift information indicates a difference between a signal frequency of the terminal device and each of frequencies of the first reference signal, the second reference signal, and the third reference signal that are received by the terminal device.

With reference to the fourth aspect, in some implementations of the fourth aspect, the first information includes compensated phase information and compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is obtained by compensating the first phase based on the phase measurement result of the first reference signal and the phase measurement result of the third reference signal. The compensated second phase is obtained by compensating the second phase based on the phase measurement result of the first reference signal and the phase measurement result of the third reference signal. The compensated third phase is obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

With reference to the fourth aspect, in some implementations of the fourth aspect, the first information includes a direction angle, the direction angle is an angle of arrival or an angle of departure, and the direction angle is determined based on phase information. The phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the fourth aspect, in some implementations of the fourth aspect, the first information includes a direction angle, the direction angle is an angle of arrival or an angle of departure, and the direction angle is determined based on phase information and time information. The phase information indicates a first phase, a second phase, and a third phase. The time information indicates a first moment corresponding to the first phase, a second moment corresponding to the second phase, and a third moment corresponding to the third phase. The first phase is a phase that is of the first reference signal and that is obtained at the first moment, the second phase is a phase that is of the second reference signal and that is obtained at the second moment, and the third phase is a phase that is of the third reference signal and that is obtained at the third moment.

With reference to the fourth aspect, in some implementations of the fourth aspect, the first information includes a direction angle, the direction angle is an angle of arrival or an angle of departure, and the direction angle is determined based on phase difference information. The phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the fourth aspect, in some implementations of the fourth aspect, the first information includes a direction angle, the direction angle is an angle of arrival or an angle of departure, and the direction angle is determined based on phase difference information and time difference information. The phase difference information indicates at least one of the following: a first phase difference and a second phase difference, the first phase difference and a third phase difference, and the second phase difference and the third phase difference. The time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference.

The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The first time difference is a difference between the first moment and the second moment, the second time difference is a difference between the first moment and the third moment, and the third time difference is a difference between the second moment and the third moment.

With reference to the fourth aspect, in some implementations of the fourth aspect, the first information includes a direction angle, the direction angle is an angle of arrival or an angle of departure, and the direction angle is determined based on phase information and frequency shift information. The phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The frequency shift information indicates a difference between a signal frequency of the terminal device and each of frequencies of the first reference signal, the second reference signal, and the third reference signal that are received by the terminal device.

With reference to the fourth aspect, in some implementations of the fourth aspect, the first information includes a direction angle, the direction angle is an angle of arrival or an angle of departure, and the direction angle is determined based on phase information, time information, and frequency shift information. The phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The time information indicates the first moment corresponding to the first phase, the second moment corresponding to the second phase, and the third moment corresponding to the third phase. The frequency shift information indicates a difference between a signal frequency of the terminal device and each of frequencies of the first reference signal, the second reference signal, and the third reference signal that are received by the terminal device.

With reference to the fourth aspect, in some implementations of the fourth aspect, the first information includes a direction angle, the direction angle is an angle of arrival or an angle of departure, and the direction angle is determined based on phase difference information and frequency shift information. The phase difference information indicates at least one of the following: a first phase difference and a second phase difference, the first phase difference and a third phase difference, and the second phase difference and the third phase difference. The frequency shift information indicates a difference between a signal frequency of the terminal device and each of frequencies of the first reference signal, the second reference signal, and the third reference signal that are received by the terminal device. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the fourth aspect, in some implementations of the fourth aspect, the first information includes a direction angle, the direction angle is an angle of arrival or an angle of departure, and the direction angle is determined based on phase difference information, time difference information, and frequency shift information. The phase difference information indicates at least one of the following: a first phase difference and a second phase difference, the first phase difference and a third phase difference, and the second phase difference and the third phase difference. The time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The frequency shift information indicates a difference between a signal frequency of the terminal device and each of frequencies of the first reference signal, the second reference signal, and the third reference signal that are received by the terminal device.

The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment. The first time difference is a difference between the first moment and the second moment, the second time difference is a difference between the first moment and the third moment, and the third time difference is a difference between the second moment and the third moment.

With reference to the fourth aspect, in some implementations of the fourth aspect, the first information includes a direction angle, the direction angle is an angle of arrival or an angle of departure, and the direction angle is determined based on compensated phase information or compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is a phase obtained by compensating the first phase based on the phase measurement result of the first reference signal and the phase measurement result of the third reference signal. The compensated second phase is a phase obtained by compensating the second phase based on the phase measurement result of the first reference signal and the phase measurement result of the third reference signal. The compensated third phase is a phase obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

According to a fifth aspect, a communication apparatus is provided, including a receiving unit and a processing unit. The receiving unit is configured to receive first information, where the first information indicates a direction angle, and the first information is determined based on phase measurement results of a first reference signal, a second reference signal, and a third reference signal. The processing unit is configured to determine the direction angle based on the first information. The first reference signal and the third reference signal are sent by using a third antenna, the second reference signal is sent by using a fourth antenna, and the third antenna and the fourth antenna are different antennas of a first device; or the first reference signal and the third reference signal are received by using a first antenna, the second reference signal is received by using a second antenna, and the first antenna and the second antenna are different antennas of a terminal device.

With reference to the fifth aspect, in some implementations of the fifth aspect, the communication apparatus further includes a sending unit, and the sending unit is configured to send the first reference signal, the second reference signal, and the third reference signal.

With reference to the fifth aspect, in some implementations of the fifth aspect, the first information includes phase information, and the phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the fifth aspect, in some implementations of the fifth aspect, the first information further includes time information, and the time information indicates the first moment corresponding to the first phase, the second moment corresponding to the second phase, and the third moment corresponding to the third phase.

With reference to the fifth aspect, in some implementations of the fifth aspect, the first information includes phase difference information, and the phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the fifth aspect, in some implementations of the fifth aspect, the first information further includes time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The first time difference is a difference between the first moment and the second moment, the second time difference is a difference between the first moment and the third moment, and the third time difference is a difference between the second moment and the third moment.

With reference to the fifth aspect, in some implementations of the fifth aspect, the first information further includes frequency shift information, and the frequency shift information indicates a difference between a signal frequency of the terminal device and each of frequencies of the first reference signal, the second reference signal, and the third reference signal that are received by the terminal device.

With reference to the fifth aspect, in some implementations of the fifth aspect, the first information includes compensated phase information and compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is a phase obtained by compensating the first phase based on the phase measurement result of the first reference signal and the phase measurement result of the third reference signal. The compensated second phase is a phase obtained by compensating the second phase based on the phase measurement result of the first reference signal and the phase measurement result of the third reference signal. The compensated third phase is a phase obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

According to a sixth aspect, a communication apparatus is provided, including a receiving unit and a processing unit. The receiving unit is configured to receive first information, where the first information indicates a direction angle, and the first information is determined based on phase measurement results of a first reference signal, a second reference signal, and a third reference signal. The processing unit is configured to determine the direction angle based on the first information. The first reference signal and the third reference signal are sent by using a third antenna, the second reference signal is sent by using a fourth antenna, and the third antenna and the fourth antenna are different antennas of a first device; or the first reference signal and the third reference signal are received by using a first antenna, the second reference signal is received by using a second antenna, and the first antenna and the second antenna are different antennas of a terminal device.

With reference to the sixth aspect, in some implementations of the sixth aspect, the first information includes phase information, and the phase information indicates a first phase, a second phase, and a third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the sixth aspect, in some implementations of the sixth aspect, the first information further includes time information, and the time information indicates the first moment corresponding to the first phase, the second moment corresponding to the second phase, and the third moment corresponding to the third phase.

With reference to the sixth aspect, in some implementations of the sixth aspect, the first information includes phase difference information, and the phase difference information indicates at least one of the following: a first phase difference and a second phase difference, the first phase difference and a third phase difference, and the second phase difference and the third phase difference. The first phase difference is a phase difference between a first phase and a second phase, the second phase difference is a phase difference between the first phase and a third phase, and the third phase difference is a phase difference between the second phase and the third phase. The first phase is a phase that is of the first reference signal and that is obtained at a first moment, the second phase is a phase that is of the second reference signal and that is obtained at a second moment, and the third phase is a phase that is of the third reference signal and that is obtained at a third moment.

With reference to the sixth aspect, in some implementations of the sixth aspect, the first information further includes time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The first time difference is a difference between the first moment and the second moment, the second time difference is a difference between the first moment and the third moment, and the third time difference is a difference between the second moment and the third moment.

With reference to the sixth aspect, in some implementations of the sixth aspect, the first information further includes frequency shift information, and the frequency shift information indicates a difference between a signal frequency of the terminal device and each of frequencies of the first reference signal, the second reference signal, and the third reference signal that are received by the terminal device.

With reference to the sixth aspect, in some implementations of the sixth aspect, the first information includes compensated phase information and compensated phase difference information. The compensated phase information indicates at least one of the following: a first phase and a compensated second phase, a second phase and a compensated first phase, the second phase and a compensated third phase, and a third phase and the compensated second phase. The compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase.

The compensated first phase is a phase obtained by compensating the first phase based on the phase measurement result of the first reference signal and the phase measurement result of the third reference signal. The compensated second phase is a phase obtained by compensating the second phase based on the phase measurement result of the first reference signal and the phase measurement result of the third reference signal. The compensated third phase is a phase obtained by compensating the third phase based on the phase measurement result of the first reference signal and the phase measurement result of the third reference signal. The phase measurement result of the first reference signal includes the first phase and a first moment, and the first phase is a phase that is of the first reference signal and that is obtained at the first moment. The phase measurement result of the second reference signal includes the second phase and a second moment, and the second phase is a phase that is of the second reference signal and that is obtained at the second moment. The phase measurement result of the third reference signal includes the third phase and a third moment, and the third phase is a phase that is of the third reference signal and that is obtained at the third moment.

According to a seventh aspect, a communication apparatus is provided, including: a processor. The processor is coupled to a memory. The memory is configured to store a program or instructions. When the program or the instructions are executed by the processor, the communication apparatus is enabled to implement the method in any possible implementation of the first aspect to the third aspect.

According to an eighth aspect, a chip is provided. The chip includes a processor. A memory configured to store a computer program is disposed independently of the chip, and the processor is configured to execute the computer program stored in the memory, to perform the method in any possible implementation of the first aspect to the third aspect.

According to a ninth aspect, a computer program product is provided. The computer program product includes computer program code. When the computer program code is run on a computer, the computer is enabled to perform the method in any possible implementation of the first aspect to the third aspect.

According to a tenth aspect, a computer-readable storage medium is provided. The computer-readable storage medium stores a computer program or instructions. When the computer program or the instructions are executed, the method in any possible implementation of the first aspect to the third aspect is implemented.

According to an eleventh aspect, a communication system is provided. The communication system includes a terminal device and a first device. The terminal device is configured to perform the method in any possible implementation of the first aspect, or the first device is configured to perform the method in any possible implementation of the second aspect.

According to a twelfth aspect, a communication system is provided. The communication system includes a terminal device, a first device, and a second device. The terminal device is configured to perform the method in any possible implementation of the first aspect, or the first device is configured to perform the method in any possible implementation of the second aspect, or the second device is configured to perform the method in any possible implementation of the third aspect.

It may be understood that any communication apparatus, chip, computer program product, computer-readable storage medium, communication system, or the like provided above is configured to perform the corresponding method provided above. Therefore, for beneficial effects that can be achieved by the communication apparatus, the chip, the computer program product, the computer-readable storage medium, the communication system, or the like, refer to beneficial effects in the corresponding method. Details are not described herein again.

**BRIEF DESCRIPTION OF DRAWINGS**

FIG. 1 is a diagram of an application scenario according to this application;
FIG. 2 is a diagram of another application scenario according to this application;
FIG. 3 is a diagram of receiving a reference signal by a multi-antenna device;
FIG. 4 is a diagram of sending a reference signal by a multi-antenna device;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;

FIG. 8 is a schematic flowchart of another communication method according to an embodiment of this application;

FIG. 9 is a schematic flowchart of another communication method according to an embodiment of this application;

FIG. 10 is a schematic flowchart of another communication method according to an embodiment of this application;

FIG. 11 is a schematic flowchart of another communication method according to an embodiment of this application;

FIG. 12 is a schematic flowchart of another communication method according to an embodiment of this application;

FIG. 13 is a schematic flowchart of another communication method according to an embodiment of this application;

FIG. 14 is a schematic flowchart of another communication method according to an embodiment of this application;

FIG. 15 is a schematic flowchart of another communication method according to an embodiment of this application;

FIG. 16 is a diagram of a communication apparatus according to an embodiment of this application; and

FIG. 17 is a diagram of another communication apparatus according to an embodiment of this application.

## DESCRIPTION OF EMBODIMENTS

The following describes technical solutions of embodiments in this application with reference to accompanying drawings.

In this application, "at least one" means one or more, and "a plurality of" means two or more. In addition, in embodiments of this application, "first", "second", and various numeric numbers are merely used for distinguishing for ease of description, and are not intended to limit the scope of embodiments of this application. The sequence numbers of the processes described below do not mean execution sequences. The execution sequences of the processes should be determined based on functions and internal logic of the processes, and should not constitute any limitation on implementation processes of embodiments of this application. In addition, in embodiments of this application, words such as "701", "801", and "901" are merely identifiers for ease of description, and do not limit a sequence of performing steps.

In this application, "indicate" may include "directly indicate" and "indirectly indicate". When a piece of indication information indicates A, the indication information may directly indicate A or indirectly indicate A, but it does not indicate that the indication information definitely carries A. In embodiments of this application, descriptions such as "when...", "in a case of...", and "if" all mean that the device performs corresponding processing in an objective case, and are not limited to time, and the device is not required to perform a determining action during implementation. This does not mean that there is another limitation.

It should be noted that, in this application, the word "example", "for example", or the like is used to represent giving an example, an illustration, or a description. Any embodiment or design scheme described as an "example" or "for example" in this application should not be explained as being more preferred or having more advantages than another embodiment or design scheme. Exactly, using of the word "example", "for example", or the like is intended to present a relative concept in a specific manner.

The technical solutions of embodiments of this application may be applied to various communication systems, such as a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, and a new radio (new radio, NR) access technology. The technical solutions of this application may be further applied to a future communication system such as a 6th generation mobile communication system.

Embodiments of this application may be applied to a terminal device. The terminal device may be a device that provides voice/data connectivity for a user, for example, a handheld device or a vehicle-mounted device having a wireless connection function; may be a device in internet of vehicles communication, for example, a communication terminal uploaded by a vehicle or a road side unit (road side unit, RSU); may be a communication terminal on an uncrewed aerial vehicle; or may be a terminal device in an internet of things (internet of things, IoT) system. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

For example, the terminal device includes but is not limited to: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. A specific form of the terminal device is not limited in embodiments of this application.

The technical solutions in embodiments of this application may be further applied to an access network device. The access network device may be a device that enables a terminal device to access a wireless network. The access network device may also be referred to as a radio access network (radio access network, RAN) node, a radio access network device, or a network device. For example, the access network device may be a base station.

The base station in embodiments of this application may cover various names in a broad sense, or may be replaced with the following names, for example, a NodeB (NodeB), an evolved base station (evolved NodeB, eNB), a next generation base station (next generation NodeB, gNB), a relay station, a transmission and reception point (transmission and reception point, TRP), a transmission point (transmission point, TP), a master station (master eNodeB, MeNB), a secondary station (secondary eNodeB, SeNB), a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a network side device in a 6G network, a device that undertakes a base station function in a future communication system, or the like. The base station may support networks of a same access technology or different access technologies.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device that communicates with another base station.

A positioning management device is a device used by the network side to determine positioning information of the terminal device. The positioning management device may be a location management function (location management function, LMF) entity, an evolved serving mobile location center (evolved serving mobile location center, E-SMLC), or another device that can be used to determine the positioning information of the terminal device.

A specific technology and a specific device form that are used by the access network device are not limited in embodiments of this application.

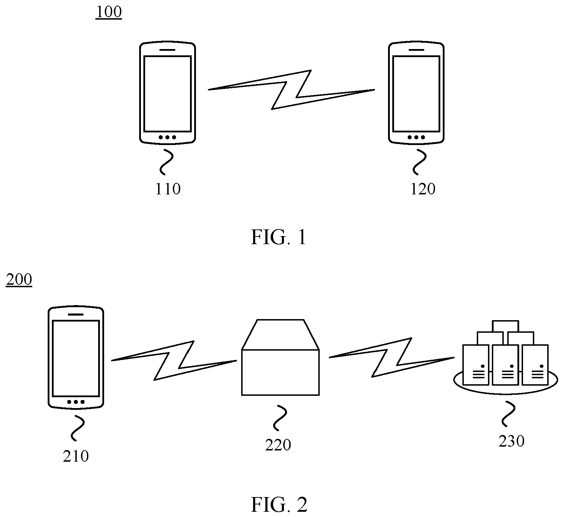

For ease of understanding embodiments of this application, first, FIG. 1 and FIG. 2 are used as examples to describe application scenarios to which embodiments of this application are applicable.

FIG. 1 is a diagram of an application scenario 100 according to this application. As shown in FIG. 1, the application scenario 100 may include two terminal devices, for example, a terminal device 110 and a terminal device 120 in FIG. 1. The application scenario 100 mainly relates to a sidelink positioning scenario. In this scenario, the terminal device 110 and the terminal device 120 may determine a direction angle in a direct communication manner, to complete relative positioning or absolute positioning. When both of locations of the terminal device 110 and the terminal device 120 are unknown, the terminal device 110 and the terminal device 120 may determine a direction angle in a direct communication manner, to implement relative positioning. When an absolute location of the terminal device 110 or an absolute location of the terminal device 120 is known, the terminal device 110 and the terminal device 120 may determine a direction angle in a direct communication manner, to implement absolute positioning.

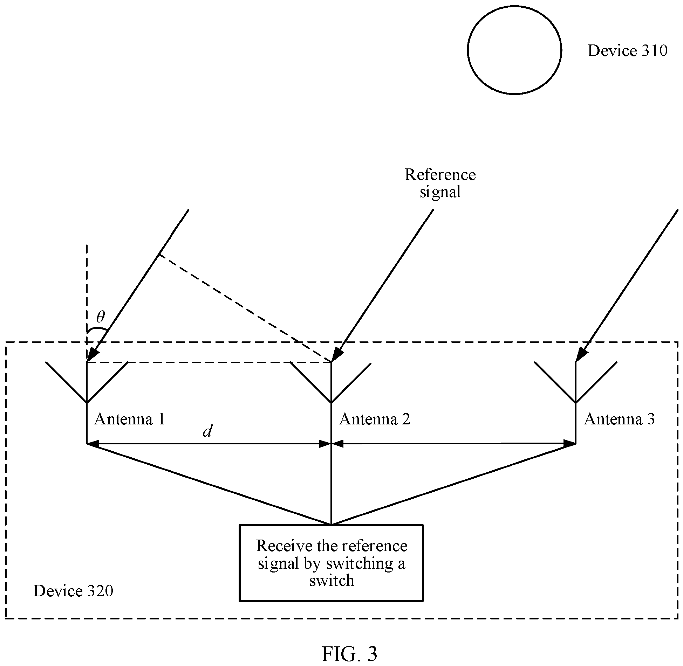

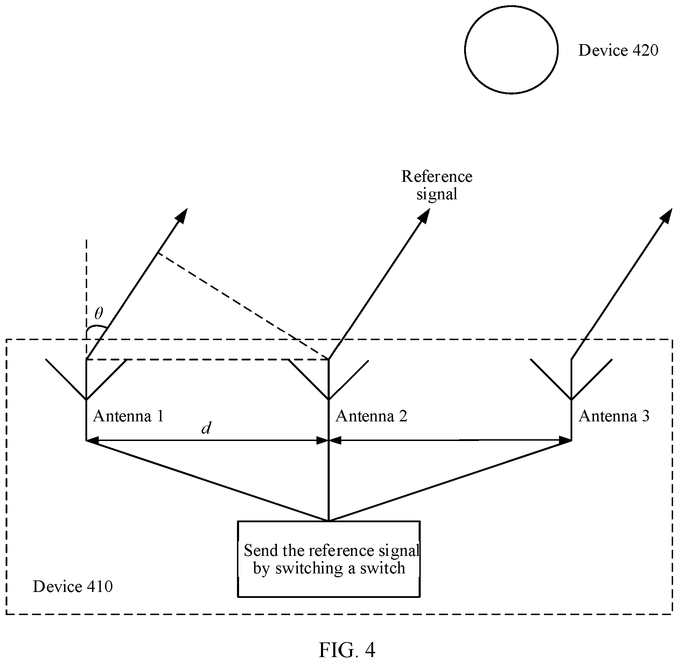

In this embodiment of this application, the direction angle may include an angle of arrival (angle of arrival, AOA) and an angle of departure (angle of departure, AOD). The AOA may be understood as a relative direction angle (for example, an angle of arrival $\theta$ shown in FIG. 3) at which a signal transmitted by a single antenna is incident to an antenna array. The AOD may be understood as a relative direction angle (for example, an angle of departure $\theta$ shown in FIG. 4) at which a signal transmitted by the antenna array is incident to another antenna.

It should be noted that the terminal device 110 and the terminal device 120 may have a plurality of antennas, and the terminal device 110 and the terminal device 120 may receive or send reference signals by using the plurality of antennas in an antenna switching manner.

FIG. 2 is a diagram of an application scenario 200 according to this application. As shown in FIG. 2, the application scenario 200 may include a terminal device 210, a device 220, and a positioning management device 230, and the terminal device 210 can exchange signaling with the device 220. In a possible implementation, the application scenario 200 relates to a sidelink positioning scenario, and the device 220 may be another terminal device, or may be a road side unit RSU. In this scenario, the terminal device 210 and the device 220 may determine a direction angle in a direct communication manner, to complete relative positioning or absolute positioning. In another possible implementation, the application scenario 200 relates to a cellular positioning scenario, and the device 220 may be an access network device. In this scenario, a location of the access network device 220 is generally known. Therefore, the access network device 220 may be used as an anchor device, and is used to determine a location of the terminal device 210. The positioning management device 230 is used as a third-party device, and may participate in solving a direction angle and the like. The device 220 may have a plurality of antennas, and may send reference signals by using the plurality of antennas in an antenna switching manner.

It should be noted that a quantity of devices 220 in FIG. 2 is merely an example for description. This application may further include more devices 220. This is not limited in this application.

It should be understood that the plurality of antennas related to each device in FIG. 1 and FIG. 2 may be physical antennas at a plurality of different locations on the device, or may be virtual antennas formed by motion of an antenna on the device, or a combination of both. This is not limited in this application. In addition, the application scenarios shown in FIG. 1 and FIG. 2 are merely examples for description, and shall not constitute any limitation on this application.

FIG. 3 is a diagram of receiving a reference signal by a multi-antenna device. For example, in FIG. 3, a device 310 and a device 320 may be included. The device 310 is a transmit end device. The device 310 may have a plurality of antennas, or may have merely one antenna. The device 310 may be the terminal device 110 or the terminal device 120 in FIG. 1, or the device 310 may be the device 220 in FIG. 2. It should be noted that when the device 310 has the plurality of antennas, the device 310 should send reference signals by using a same antenna. The device 320 is a receive end device. The device 320 has a plurality of antennas. The device 320 may be the terminal device 110 or the terminal device 120 in FIG. 1, or the device 320 may be the terminal device 210 in FIG. 2. It should be noted that the device 320 may receive reference signals by using different antennas (that is, in an antenna switching manner) by switching a switch, and measure phases of the reference signals.

FIG. 4 is a diagram of sending a reference signal by a multi-antenna device. For example, in FIG. 4, a device 410 and a device 420 may be included. The device 410 is a transmit end device. The device 410 may have a plurality of antennas. The device 410 may be the terminal device 120 or the terminal device 110 in FIG. 1, or the device 410 may be the device 220 in FIG. 2. It should be noted that the device 410 may send reference signals by using different antennas (that is, in an antenna switching manner) by switching a switch. The device 420 is a receive end device. The device 420 may have a plurality of antennas, or may have merely one antenna. The device 420 may be the terminal device 110 or the terminal device 120 in FIG. 1, or the device 420 may be the terminal device 210 in FIG. 2. It should be noted that when the device 420 has the plurality of antennas, the device 420 should receive reference signals by using a same antenna.

It can be learned from FIG. 3 and FIG. 4 that FIG. 3 shows a manner of measuring an angle of arrival AOA, and FIG. 4 shows a manner of measuring an angle of departure AOD. In FIG. 3, the receive end device 320 receives reference signals in the antenna switching manner and measures phases. For example, the device 320 has three antennas, which are marked as an antenna 1, an antenna 2, and an antenna 3, a distance between the antenna 1 and the antenna 2 is $d$, and a to-be-solved direction angle is $\theta$. In FIG. 4, the transmit end device 410 sends reference signals in the antenna switching manner, and the receive end device 420 receives the reference signals and measures phases of the reference signals in a time division manner. For example, the device 410 also has three antennas, which are marked as an antenna 1, an antenna 2, and an antenna 3, a distance between the antenna 1 and the antenna 2 is $d$, and a to-be-solved direction angle is $\theta$.

The following uses the antenna 1 and the antenna 2 in FIG. 3 as an example to describe in detail a possible manner of calculating the direction angle $\theta$.

It is assumed that the device 320 measures, at a moment $t_1$, a phase of a reference signal received by the antenna 1, and a theoretical calculation formula for obtaining a phase measurement value is as follows:

$$\varphi_1\left(t_1\right)=\left(-2\pi f_1\tau_1 + 2\pi f_1 t_1 - 2\pi f_2 t_1 + 2\pi f_1 k_1 - 2\pi f_2 k_2 + \theta_1 - \theta_2\right)\bmod 2\pi \quad \text{(Formula 1)}$$

$f_1$ is a frequency at which the device 310 sends a reference signal, $f_2$ is a frequency of a local signal of the device 320, $\tau_1$ is signal propagation time corresponding to the antenna 1, $k_1$ and $k_2$ respectively represent time synchronization errors of the device 310 and the device 320, and $\theta_1$ and $\theta_2$ respectively represent initial phases of signals of the device 310 and the device 320.

Similarly, it is assumed that the device 320 measures, at a moment $t_2$, a phase of a reference signal received by the antenna 2, and a theoretical calculation formula for obtaining a phase measurement value is as follows:

$$\varphi_2\left(t_2\right)=\left(-2\pi f_1\tau_2 + 2\pi f_1 t_2 - 2\pi f_2 t_2 + 2\pi f_1 k_1 - 2\pi f_2 k_2 + \theta_1 - \theta_2\right)\bmod 2\pi \quad \text{(Formula 2)}$$

$\tau_2$ is signal propagation time corresponding to the antenna 2.

A difference between the phases of the reference signals received by the antenna 1 and the antenna 2 that is calculated by using Formula 1 and Formula 2 is:

$$\Delta\varphi = \left(\varphi_2\left(t_2\right) - \varphi_1\left(t_1\right)\right) \bmod 2\pi = 2\pi f_1\left(\tau_1 - \tau_2\right) + 2\pi\left(f_1 - f_2\right)\left(t_2 - t_1\right) \bmod 2\pi \quad \text{(Formula 3)}$$

It is assumed that in a case of a plane wave, Formula 3 may be written as follows:

$$\Delta\varphi = 2\pi f_1 \frac{d\sin\theta}{c} + 2\pi\left(f_1 - f_2\right)\left(t_2 - t_1\right) \bmod 2\pi \qquad \text{(Formula 4)}$$

$d$ is a distance between the antenna 1 and the antenna 2, $\theta$ is the to-be-solved direction angle, and c is a propagation speed of an electromagnetic wave.

Formula 4 is expanded to obtain the following formula:

$$\Delta\varphi = 2\pi f_1 \frac{d\sin\theta}{c} + 2\pi\left(f_1 - f_2\right)\left(t_2 - t_1\right) + k \times 2\pi \qquad \text{(Formula 5)}$$

Then, an antenna propagation distance difference is:

$$d\sin\theta = \frac{c\Delta\varphi}{2\pi f_1} - \frac{c\left(f_1 - f_2\right)\left(t_2 - t_1\right)}{f_1} - k \times \frac{c}{f_1} \qquad \text{(Formula 6)}$$

$k$ is an integer, and a value on the right of the equal sign in Formula 6 is less than or equal to $d$ by adjusting a value of $k$. In an ideal case, assuming that there is no frequency shift between the signal frequencies of the device 310 and the device 320, that is, $f_1 = f_2$, an accurate direction angle $\theta$ may be obtained by using Formula 6.

Actually, each device has a frequency shift to some extent, and there is a high probability that frequency shifts of two devices are different. In other words, the signal frequencies of the device 310 and the device 320 (or the device 410 and the device 420) are inconsistent. It is assumed that $f_1 = (1+e_1)f_c$ and $f_2 = (1+e_2)f_c$, $f_1 - f_2 = (e_1 - e_2)f_c$, where $f_c$ is a carrier frequency in the ideal case, $e_1$ and $e_2$ are respectively frequency shift ratios of the device 310 and the device 320, and absolute values of the frequency shift ratios are generally from 0 to 20 ppm, where ppm means parts per million.

It can be learned from Formula 6 that, in a process of solving the direction angle $\theta$, when $e_1 \neq e_2$ or $t_2 \neq t_1$, an additional phase rotation caused by phase measurement at different time in a frequency shift scenario occurs, resulting in an angle measurement error.

By way of example and not limitation, it is assumed that in the ideal case, the carrier frequency $f_c$ is 3 GHz, a distance $d$ between the antenna 1 and the antenna 2 is 5 *cm*, and a real direction angle $\theta$ is 50°. When $e_1 - e_2 = 8ppm$ and $t_2 - t_1 = 4\mu s$, a phase error caused by the frequency shift is $2\pi(f_1 - f_2)(t_2 - t_1) = 0.6rad$. The direction angle obtained through calculation by using Formula 6 is 73°, and an angle measurement error reaches 23°. It can be learned that the angle measurement error caused by the frequency shift cannot be ignored.

Therefore, this application provides a communication method. Reference signals of a same frequency resource are sent by using a same antenna repeatedly or received by using a same antenna repeatedly, and phase measurement results of the reference signals are obtained. A phase error caused by a frequency shift may be determined based on the phase measurement results. A direction angle is calculated based on the frequency shift, so that angle measurement precision can be improved.

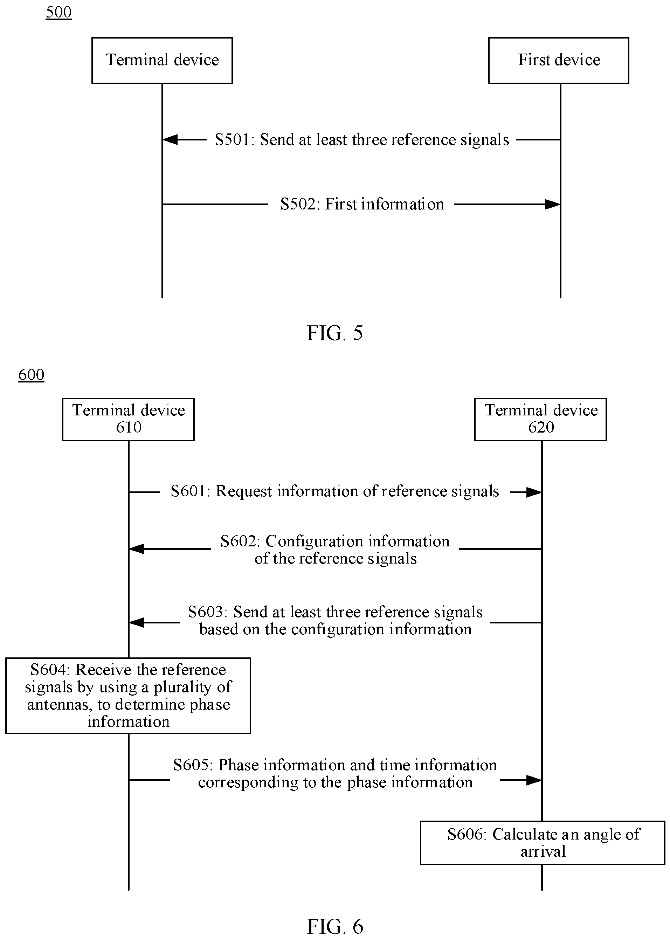

FIG. 5 is a schematic flowchart of a communication method according to an embodiment of this application.

As shown in FIG. 5, the method 500 relates to interaction between a terminal device and a first device.

In an example, if the method 500 is applied to a sidelink positioning scenario, the first device may be a terminal device.

For example, if the method 500 is applied to the sidelink positioning scenario shown in FIG. 1, the terminal device may be the terminal device 110 shown in FIG. 1, and the first device may be the terminal device 120 shown in FIG. 1.

For another example, if the method 500 is applied to the sidelink positioning scenario shown in FIG. 1, the terminal device may be the terminal device 120 shown in FIG. 1, and the first device may be the terminal device 110 shown in FIG. 1.

In another example, if the method 500 is applied to a sidelink positioning scenario, the first device may be a terminal device or a road side unit RSU.

For example, if the method 500 is applied to the sidelink positioning scenario shown in FIG. 2, the terminal device may be the terminal device 210 shown in FIG. 2, the first device may be the device 220 shown in FIG. 2, and the device 220 is another terminal device or a road side unit RSU.

For example, the method 500 shown in FIG. 5 may include S501 and S502. The following describes in detail the steps in the method 500.

S501: The first device sends at least three reference signals, and correspondingly, the terminal device receives the at least three reference signals.

In a possible implementation, the first device has a plurality of antennas, and the first device sends the at least three reference signals by using a same antenna. Correspondingly, the terminal device receives, by using the plurality of antennas in an antenna switching manner, the at least three reference signals sent by the first device, and the terminal device should receive at least two reference signals by using a same antenna.

For example, the terminal device has four antennas, which are marked as a first antenna, a second antenna, a third antenna, and a fourth antenna. It is assumed that the first device uses a same antenna to send reference signals for six times, and the terminal device may receive the reference signals in a manner of 1-2-1-3-1-4. To be specific, the terminal device first receives a first reference signal by using the first antenna, the terminal device performs antenna switching to receive a second reference signal by using the second antenna, the terminal device performs antenna switching to receive a third reference signal by using the first antenna, the terminal device performs antenna switching to receive a fourth reference signal by using the third antenna, the terminal device performs antenna switching to receive a fifth reference signal by using the first antenna, and finally, the terminal device performs antenna switching to receive a sixth reference signal by using the fourth antenna. In other words, the first device sends the first reference signal, the second reference signal, the third reference signal, the fourth reference signal, the fifth reference signal, and the sixth reference signal by using the same antenna. Correspondingly, the terminal device repeatedly uses the same antenna to receive a reference signal once at an interval of one reference signal. To be specific, the terminal device receives the first reference signal, the third reference signal, and the fifth reference signal by using the first antenna, receives the second reference signal by using the second antenna, receives the fourth reference signal by using the third antenna, and receives the sixth reference signal by using the fourth antenna.

For another example, the terminal device has three antennas, which are marked as a first antenna, a second antenna, and a third antenna. It is assumed that the first device uses a same antenna to send reference signals for five times, and the terminal device may receive the reference signals in a manner of 1-2-1-2-3. To be specific, the terminal device first receives a first reference signal by using the first antenna, the terminal device performs antenna switching to receive a second reference signal by using the second antenna, the terminal device performs antenna switching to receive a third reference signal by using the first antenna, the terminal device performs antenna switching to receive a fourth reference signal by using the second antenna, and finally, the terminal device performs antenna switching to receive a fifth reference signal by using the third antenna. In other words, the first device sends the first reference signal, the second reference signal, the third reference signal, the fourth reference signal, and the fifth reference signal by using the same antenna. Correspondingly, the terminal device receives the first reference signal and the third reference signal by using the first antenna, receives the second reference signal and the fourth reference signal by using the second antenna, and receives the fifth reference signal by using the third antenna.

For another example, the terminal device has two antennas, which are marked as a first antenna and a second antenna. It is assumed that the first device uses a same antenna to send reference signals for three times, and the terminal device may receive the reference signals in a manner of 1-2-1. To be specific, the terminal device first receives a first reference signal by using the first antenna, then the terminal device performs antenna switching to receive a second reference signal by using the second antenna, and finally, the terminal device performs antenna switching to receive a third reference signal by using the first antenna. In other words, the first device sends the first reference signal, the second reference signal, and the third reference signal by using the same antenna. Correspondingly, the terminal device receives the first reference signal and the third reference signal by using the first antenna, and receives the second reference signal by using the second antenna.

It should be understood that the first reference signal and the third reference signal are received by using the first antenna, the second reference signal is received by using the second antenna, and the first antenna and the second antenna are different antennas of the terminal device. In other words, the first reference signal and the third reference signal are received by using a same spatial filtering parameter, the second reference signal and the first reference signal are received by using different spatial filtering parameters, and the second reference signal and the third reference signal are received by using different spatial filtering parameters. It may also be understood as that the first reference signal and the third reference signal have a same transmission configuration indicator (transmission configuration indicator, TCI) state, the second reference signal and the first reference signal have different TCI states, and the second reference signal and the third reference signal have different TCI states.

It should be noted that, that two reference signals have a same TCI state may be understood as that there is a QCL relationship between the two reference signals. For example, that the first reference signal and the third reference signal have the same TCI state may be understood as that there is a QCL relationship between the first reference signal and the third reference signal, in other words, there is one or more of the following QCL relationships between the first reference signal and the third reference signal:

Type A (Type A): a Doppler shift, a Doppler spread, an average delay, and a delay spread;

Type B (Type B): a Doppler shift and a Doppler spread;
Type C (Type C): a Doppler shift and an average delay; and
Type D (Type D): a spatial receive parameter.

In another possible implementation, the first device has a plurality of antennas, and the first device sends the reference signals in an antenna switching manner, and at least one antenna of the first device is repeatedly used to send the reference signal at least once. Correspondingly, the terminal device receives, by using a same antenna, the at least three reference signals sent by the first device.

For example, the first device has four antennas, which are marked as a first antenna, a second antenna, a third antenna, and a fourth antenna, and the first device may send reference signals in a manner of 1-2-1-3-1-4. To be specific, the first device first sends a first reference signal by using the first antenna, the first device performs antenna switching to send a second reference signal by using the second antenna, the first device performs antenna switching to send a third reference signal by using the first antenna, the first device performs antenna switching to send a fourth reference signal by using the third antenna, the first device performs antenna switching to send a fifth reference signal by using the first antenna, and finally, the first device performs antenna switching to send a sixth reference signal by using the fourth antenna. In other words, the first device may repeatedly use the same antenna to send a reference signal once at an interval of one reference signal. To be specific, the first device may send the first reference signal, the third reference signal, and the fifth reference signal by using the first antenna, send the second reference signal by using the second antenna, send the fourth reference signal by using the third antenna, and send the sixth reference signal by using the fourth antenna. Correspondingly, the terminal device receives, by using the same antenna, the first reference signal, the third reference signal, and the fifth reference signal that are sent by using the first antenna of the first device, receives the second reference signal sent by using the second antenna of the first device, and receives the fourth reference signal sent by using the third antenna of the first device, and receives the sixth reference signal sent by using the fourth antenna of the first device.

For another example, the first device has three antennas, which are marked as a first antenna, a second antenna, and a third antenna, and the first device may send reference signals in a manner of 1-2-1-2-3. To be specific, the first device first sends a first reference signal by using the first antenna, the first device performs antenna switching to send a second reference signal by using the second antenna, the first device performs antenna switching to send a third reference signal by using the first antenna, the first device performs antenna switching to send a fourth reference signal by using the second antenna, and finally, the first device performs antenna switching to send a fifth reference signal by using the third antenna. In other words, the first device may send the first reference signal and the third reference signal by using the first antenna, send the second reference signal and the fourth reference signal by using the second antenna, and send the fifth reference signal by using the third antenna. Correspondingly, the terminal device receives, by using the same antenna, the first reference signal and the third reference signal that are sent by using the first antenna of the first device, receives the second reference signal and the fourth reference signal that are sent by using the second antenna of the first device, and receives the fifth reference signal sent by using the third antenna of the first device.

For another example, the first device has two antennas, which are marked as a first antenna and a second antenna, and the first device may send reference signals in a manner of 1-2-1. To be specific, the first device first sends a first reference signal by using the first antenna, then the first device performs antenna switching to send a second reference signal by using the second antenna, and finally, the first device performs antenna switching to send a third reference signal by using the first antenna. In other words, the first device may send the first reference signal and the third reference signal by using the first antenna, and send the second reference signal by using the second antenna. Correspondingly, the terminal device receives, by using the same antenna, the first reference signal and the third reference signal that are sent by using the first antenna of the first device, and receives the second reference signal sent by using the second antenna of the first device.

It should be understood that the first reference signal and the third reference signal are sent by using the first antenna, the second reference signal is sent by using the second antenna, and the first antenna and the second antenna are different antennas of the first device. In other words, the first reference signal and the third reference signal are sent through a same antenna port, that is, the first reference signal and the third reference signal correspond to the same antenna port, and the second reference signal is sent through another antenna port. It may also be understood as that the first reference signal and the third reference signal are transmitted by using a same spatial filtering parameter, the second reference signal and the first reference signal are transmitted by using different spatial filtering parameters, and the second reference signal and the third reference signal are transmitted by using different spatial filtering parameters. It may be further understood as that the first reference signal and the third reference signal have a same TCI state, the second reference signal and the first reference signal have different TCI states, and the second reference signal and the third reference signal have different TCI states.

Optionally, the first device may further send configuration information to the terminal device. The configuration information indicates which reference signals are sent by using a same antenna or received by using a same antenna. For example, the configuration information indicates that the first reference signal and the third reference signal are sent by using the same antenna.

Optionally, the reference signal may carry identification information, and the identification information identifies the reference signal, an antenna for sending the reference signal, or a port for sending the reference signal. In this case, the first device may use identification information in the reference signals to indicate which reference signals are sent by using a same antenna. Correspondingly, the terminal device may determine, based on the identification information in the received reference signals, which reference signals are sent by using a same antenna.

Optionally, frequency resources corresponding to the at least three reference signals are the same, that is, carrier (carrier) resources of the at least three reference signals are the same, or bandwidth part (bandwidth part, BWP) resources of the at least three reference signals are the same. Resource elements (resource elements, REs) corresponding to the at least three reference signals may be the same or may be different. In other words, the at least three reference signals may correspond to different symbols of a same positioning reference signal (positioning reference signal, PRS)/sounding reference signal (sounding reference signal, SRS) resource, or correspond to different symbols of a same PRS/SRS resource set. In addition, the at least three reference signals may alternatively correspond to different symbols of different PRS/SRS resources, or the at least three reference signals correspond to different symbols of different PRS/SRS resource sets.

For example, the first device sends the first reference signal and the third reference signal by using the same antenna. The first reference signal and the third reference signal may be repeated symbols in a same PRS/SRS resource, or the first reference signal and the third reference signal may be repeated symbols in a same PRS/SRS resource set.

It should be noted that, in this embodiment of this application, a quantity of antennas and a quantity of reference signals are merely examples for description. This application may further include more antennas and more reference signals. This is not limited in this application.

S502: The terminal device sends first information, and correspondingly, the first device receives the first information.

It should be understood that, after receiving the reference signals in S501, the terminal device may obtain a phase measurement result of each reference signal through measurement, determine the first information based on the obtained phase measurement result of each reference signal, and finally send the obtained first information to the first device.

It should be understood that the first information may indicate a direction angle, and the first information is determined based on the phase measurement result of the reference signal received by the terminal device. For example, the first information is determined based on phase measurement results of the first reference signal, the second reference signal, and the third reference signal. The phase measurement result of the first reference signal includes a first phase and a first moment, where the first phase is a phase that is of the first reference signal and that is obtained at the first moment. The phase measurement result of the second reference signal includes a second phase and a second moment, where the second phase is a phase that is of the second reference signal and that is obtained at the second moment. The phase measurement result of the third reference signal includes a third phase and a third moment, where the third phase is a phase that is of the third reference signal and that is obtained at the third moment.

For example, it can be learned from Formula 1 or Formula 2 that the terminal device measures, at the moment $t_1$, a phase of the first reference signal (that is, the first phase) by using a 1st antenna, and a theoretical calculation formula of a phase measurement value of the first reference signal is:

$$\varphi_1\left(t_1\right) = \left(-2\pi f_1\tau_1 + 2\pi f_1 t_1 - 2\pi f_2 t_1 + 2\pi f_1 k_1 - 2\pi f_2 k_2 + \theta_1 - \theta_2\right) \bmod 2\pi \quad \text{(Formula 7)}$$

Then, the terminal device measures, at the moment $t_2$, a phase of the second reference signal (that is, the second phase) by using a 2nd antenna, and a theoretical calculation formula of a phase measurement value of the second reference signal is:

$$\varphi_2\left(t_2\right) = \left(-2\pi f_1\tau_2 + 2\pi f_1 t_2 - 2\pi f_2 t_2 + 2\pi f_1 k_1 - 2\pi f_2 k_2 + \theta_1 - \theta_2\right) \bmod 2\pi \quad \text{(Formula 8)}$$

Then, the terminal device measures, at the moment $t_3$, a phase of the third reference signal (that is, the third phase) by using the 1st antenna, and a theoretical calculation formula of a phase measurement value of the third reference signal is:

$$\varphi_1\left(t_3\right) = \left(-2\pi f_1\tau_1 + 2\pi f_1 t_3 - 2\pi f_2 t_3 + 2\pi f_1 k_1 - 2\pi f_2 k_2 + \theta_1 - \theta_2\right) \bmod 2\pi \quad \text{(Formula 9)}$$

A phase difference that is between the moment $t_1$ and the moment $t_3$ and that is of the 1st antenna is:

$$\Delta\varphi_1\left(t_1,t_3\right)=\left(\varphi_1\left(t_3\right)-\varphi_1\left(t_1\right)\right)\mathrm{mod}\,2\pi=2\pi\left(f_1-f_2\right)\left(t_3-t_1\right)\mathrm{mod}\,2\pi \qquad \text{(Formula 10)}$$

$\Delta\hat{\varphi}_1(t_1,t_3)==\Delta\varphi_1(t_1,t_3)-m\times2\pi$ may be uniquely determined based on Formula 10, where m is an integer.

Then, with reference to Formula 10, a frequency shift estimation value may be obtained:

$$f_1-f_2=\frac{\Delta\hat{\varphi}_1\left(t_1,t_3\right)}{2\pi\left(t_3-t_1\right)} \qquad \text{(Formula 11)}$$

It should be further understood that the first information may indirectly indicate the direction angle, in other words, the first information carries information used to determine the direction angle; or the first information may directly indicate the direction angle, in other words, the first information is the direction angle. The direction angle is an angle of arrival or an angle of departure.

When the first information indirectly indicates the direction angle, content included in the first information is described in detail by using an example in which the terminal device receives the first reference signal, the second reference signal, and the third reference signal. The following 10 cases may be specifically included.

Case 1

The first information includes phase information. The phase information indicates the first phase, the second phase, and the third phase.

In this case, the first information reported by the terminal device includes the phase information. The first device receives the first information, and determines the direction angle based on the first information. It should be noted that the terminal device may not report phase measurement time information, and when the terminal device exchanges information with another device, phase measurement time may be predefined. For example, the terminal device and the first device may predefine a measurement interval of a phase of each reference signal, for example, 1 $\mu s$ or 1-symbol duration. In this case, the terminal device may report merely the phase information, where the phase information indicates the first phase, the second phase, and the third phase, and a time interval between the first phase and the second phase and a time interval between the second phase and the third phase are 1 $\mu s$ or 1-symbol duration, and a time interval between the first phase and the third phase is 2 $\mu s$ or 2-symbol duration. In this way, optionally, the first device may first determine the frequency shift estimation value based on Formula 11, and then determine the direction angle based on Formula 6.

Case 2

The first information includes phase information and time information. The phase information indicates the first phase, the second phase, and the third phase. The time information indicates the first moment corresponding to the first phase, the second moment corresponding to the second phase, and the third moment corresponding to the third phase.

In this case, the first information reported by the terminal device includes the phase information and the time information. The first device receives the first information, and determines the direction angle based on the first information. For example, the first information indicates the first phase and the first moment (for example, $\varphi_1(t_1)$ and $t_1$) corresponding to the first phase, the second phase and the second moment (for example, $\varphi_2(t_2)$ and $t_2$) corresponding to the second phase, and the third phase and the third moment (for example, $\varphi_1(t_3)$ and $t_3$) corresponding to the third phase. In this way, optionally, the first device may first determine the frequency shift estimation value based on Formula 11, and then determine the direction angle based on Formula 6.

Case 3

The first information includes phase difference information. The phase difference information indicates at least one of the following: a first phase difference and a second phase difference, the first phase difference and a third phase difference, and the second phase difference and the third phase difference. The first phase difference is a phase difference between the first phase and the second phase, the second phase difference is a phase difference between the first phase and the third phase, and the third phase difference is a phase difference between the second phase and the third phase.

In this case, the first information reported by the terminal device includes the phase difference information. The first device receives the first information, and determines the direction angle based on the first information. It should be noted that the terminal device may not report time difference information corresponding to the phase difference information. When the terminal device exchanges information with another device, phase measurement time may be predefined. For example, the terminal device and the first device may predefine a measurement interval of a phase of each reference signal, for example, 1 $\mu s$ or 1-symbol duration. For example, the first information indicates the first phase difference (for example, $\varphi_2(t_2)-\varphi_1(t_1)$) and the second phase difference (for example, $\varphi_1(t_3)-\varphi_1(t_1)$), a time difference between the first phase and the second phase is 1 $\mu s$ or 1-symbol duration, and a time difference between the first phase and the third phase is $2\mu s$ or 2-symbol duration. In this way, optionally, the first device may first determine the frequency shift estimation value based on Formula 11, and then determine the direction angle based on Formula 6.

Case 4

The first information includes phase difference information and time difference information. The phase difference information indicates at least one of the following: a first phase difference and a second phase difference, the first phase difference and a third phase difference, and the second phase difference and the third phase difference. The time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The first phase difference is a phase difference between the first phase and the second phase, the second phase difference is a phase difference between the first phase and the third phase, and the third phase difference is a phase difference between the second phase and the third phase. The first time difference is a difference between the first moment and the second moment, the second time difference is a difference between the first moment and the third moment, and the third time difference is a difference between the second moment and the third moment.
In this case, the first information reported by the terminal device includes the phase difference information and time difference information corresponding to the phase difference information. The first device receives the first information, and determines the direction angle based on the first information. For example, the first information indicates the first phase difference and a time difference (for example, $\varphi_2(t_2)-\varphi_1(t_1)$ and $t_2 -t_1$) corresponding to the first phase difference, and the second phase difference and a time difference (for example, $\varphi_1(t_3)-\varphi_1(t_1)$ and $t_3 -t_1$) corresponding to the second phase difference. In this way, optionally, the first device may first determine the frequency shift estimation value based on Formula 11, and then determine the direction angle based on Formula 6.

Case 5

The first information includes phase information and frequency shift information. The phase information indicates the first phase, the second phase, and the third phase. The frequency shift information indicates a difference between a signal frequency of the terminal device and each of frequencies of the first reference signal, the second reference signal, and the third reference signal that are received by the terminal device. The signal frequency of the terminal device may be understood as a local oscillation signal generated when the terminal device performs demodulation processing on the received reference signal.
In this case, the terminal device may first determine, by using Formula 11, the frequency shift estimation value (for example, $f_1 - f_2$) based on phase measurement results obtained by using different reference signals, and report, to the first device, the phase information obtained through measurement and the frequency shift information (that is, the frequency shift estimation value), and the first device may determine the direction angle based on Formula 6.

Case 6

The first information includes phase information, time information, and frequency shift information. The phase information indicates the first phase, the second phase, and the third phase. The time information indicates the first moment corresponding to the first phase, the second moment corresponding to the second phase, and the third moment corresponding to the third phase. The frequency shift information indicates a difference between a signal frequency of the terminal device and each of frequencies of the first reference signal, the second reference signal, and the third reference signal that are received by the terminal device.
In this case, the terminal device may first determine, by using Formula 11, the frequency shift estimation value (for example, $f_1 - f_2$) based on phase measurement results obtained by using different reference signals, and report, to the first device, the phase information obtained through measurement, the time information corresponding to the phase information, and the frequency shift information (that is, the frequency shift estimation value), and the first device may determine the direction angle based on Formula 6.

Case 7

The first information includes phase difference information and frequency shift information. The phase difference information indicates at least one of the following: a first phase difference and a second phase difference, the first phase difference and a third phase difference, and the second phase difference and the third phase difference. The frequency shift information indicates a difference between a signal frequency of the terminal device and each of frequencies of the first reference signal, the second reference signal, and the third reference signal that are received by the terminal device. The first phase difference is a phase difference between the first phase and the second phase, the second phase difference is a phase difference between the first phase and the third phase, and the third phase difference is a phase difference between the second phase and the third phase.

In this case, the terminal device may first determine, based on Formula 11, the frequency shift estimation value (for example, $f_1 - f_2$) based on phase measurement results obtained by using different reference signals, and report, to the first device, the phase difference information obtained through measurement and the frequency shift information (that is, the frequency shift estimation value), and the first device may determine the direction angle based on Formula 6.

Case 8

The first information includes phase difference information, time difference information, and frequency shift information. The phase difference information indicates at least one of the following: a first phase difference and a second phase difference, the first phase difference and a third phase difference, and the second phase difference and the third phase difference. The time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference. The frequency shift information indicates a difference between a signal frequency of the terminal device and each of frequencies of the first reference signal, the second reference signal, and the third reference signal that are received by the terminal device. The first phase difference is a phase difference between the first phase and the second phase, the second phase difference is a phase difference between the first phase and the third phase, and the third phase difference is a phase difference between the second phase and the third phase. The first time difference is a difference between the first moment and the second moment, the second time difference is a difference between the first moment and the third moment, and the third time difference is a difference between the second moment and the third moment.

In this case, the terminal device may first determine, based on Formula 11, the frequency shift estimation value (for example, $f_1 - f_2$) based on phase measurement results obtained by measuring different reference signals, and report, to the first device, the phase difference information, the time difference information corresponding to the phase difference information, and the frequency shift information (that is, the frequency shift estimation value) that are obtained, and the first device may determine the direction angle based on Formula 6.

Case 9

The first information includes compensated phase information. The compensated phase information indicates at least one of the following: the first phase and a compensated second phase, the second phase and a compensated first phase, the second phase and a compensated third phase, and the third phase and the compensated second phase. The compensated first phase is obtained by compensating the first phase based on the phase measurement result of the first reference signal and the phase measurement result of the third reference signal. The compensated second phase is obtained by compensating the second phase based on the phase measurement result of the first reference signal and the phase measurement result of the third reference signal. The compensated third phase is obtained by compensating the third phase based on the phase measurement result of the first reference signal and the phase measurement result of the third reference signal.

In this case, the terminal device may report, based on frequency shift estimation on the phase obtained through measurement, reference phase information and phase information obtained through frequency shift compensation. For example, the terminal device may report the first phase and the compensated second phase, for example, $\varphi_1(t_1)$ and $(\varphi_2(t_2)-(2\pi(f_1 - f_2)(t_2 - t_1))\mathrm{mod}2\pi)\mathrm{mod}2\pi$, or $\varphi_1(t_1)$ and $\varphi_2(t_2)-2\pi(f_1 - f_2)(t_2 - t_1)$. In this case, the terminal device does not need to include time information. In this way, for example, the first device may determine, by using Formula 6, the direction angle based on the phase information that is sent by the terminal device and that is obtained through frequency shift compensation.

Case 10

The first information includes compensated phase difference information. The compensated phase difference information indicates at least one of the following: a phase difference between the first phase and a compensated second phase, a phase difference between the second phase and a compensated first phase, a phase difference between the second phase and a compensated third phase, and a phase difference between the third phase and the compensated second phase. The compensated first phase is obtained by compensating the first phase based on the phase measurement result of the first reference signal and the phase measurement result of the third reference signal. The compensated second phase is obtained by compensating the second phase based on the phase measurement result of the first reference signal and the phase measurement result of the third reference signal. The compensated third phase is obtained by compensating the third phase based on the phase measurement result of the first reference signal and the phase measurement result of the third reference signal.

In this case, the terminal device may report the compensated phase difference information. For example, the terminal device reports the phase difference between the first phase and the compensated second phase, for example, $\varphi_2(t_2)-\varphi_1(t_1)-2\pi(f_1-f_2)(t_2-t_1)$ or $((\varphi_2(t_2)-(2\pi(f_1-f_2)(t_2-t_1))\bmod2\pi)\bmod2\pi - \varphi_1(t_1))\bmod2\pi$. In this case, the terminal device does not need to include time information either. In this way, for example, the first device may determine, by using Formula 6, the direction angle based on the received compensated phase difference information.

When the first information directly indicates the direction angle, the terminal device may obtain the direction angle through calculation based on any one of the foregoing cases 1 to 10 by using Formula 6 and/or Formula 11. The direction angle may be an angle of arrival or an angle of departure. In this case, the direction angle obtained by the terminal device through calculation is a direction angle with a frequency shift considered, and the terminal device may directly send the direction angle to the first device. Correspondingly, the first device receives the direction angle sent by the terminal device.

It should be understood that a granularity of the time information and/or the time difference information is at least one of the following: a sub-nanosecond, a nanosecond, a microsecond, symbol duration, slot duration, an LTE basic time unit, an NR basic time unit, and a baseband sampling time interval.

It should be further understood that, in an actual working environment, a reference signal may reach a receiving end (that is, the terminal device) through a plurality of propagation paths. When measuring a phase of the reference signal, the receiving end (that is, the terminal device) may obtain a phase measurement result of each path. According to a principle such as minimum propagation time or maximum strength, the receiving end (that is, the terminal device) may determine which path is a first-arrival path (or a line of sight path). When reporting first information, the receiving end (that is, the terminal device) may report merely first information of the first-arrival path, or may report first information of a plurality of paths (that is, first information of the first-arrival path and first information of another path).

In conclusion, the terminal device receives the at least three reference signals, and sends the first information indicating the direction angle, so that the first device can obtain the direction angle based on the first information. Because at least two of the at least three reference signals are sent or received by using a same antenna, and the first information is determined based on the phase measurement results of the at least three reference signals, the terminal device or the first device may determine, based on the first information, a phase error caused by a frequency shift, to improve angle measurement precision.

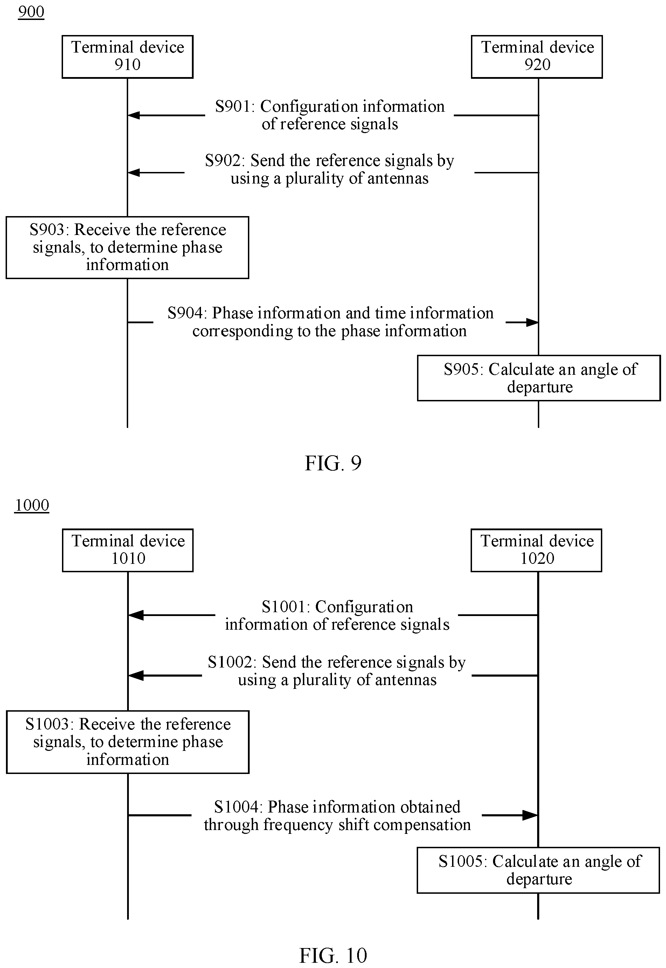

With reference to FIG. 6 to FIG. 11 and FIG. 13 to FIG. 15, the following describes in detail a specific process of obtaining a direction angle by using a communication method provided in embodiments of this application. FIG. 6 to FIG. 8 describe a specific process of obtaining an angle of arrival. FIG. 9 to FIG. 11 and FIG. 13 to FIG. 15 describe a specific process of obtaining an angle of departure.

FIG. 6 is a schematic flowchart of another communication method according to an embodiment of this application. The method 600 shown in FIG. 6 may include S601 to S606, and mainly relates to a solution in which in a sidelink positioning scenario, a terminal device 620 (an example of the first device in FIG. 5) sends reference signals by using a same antenna, a plurality of antennas of a terminal device 610 (an example of the terminal device in FIG. 5) are used to measure phases of the received reference signals in an antenna switching manner, where at least one of the antennas is repeatedly used to measure the phases of the reference signals, the terminal device 610 determines phase measurement results of the reference signals, and the terminal device 620 completes solving of an angle of arrival based on the phase measurement results of the reference signals. The following describes in detail the steps in the method 600.

S601: The terminal device 610 sends request information of the reference signals to the terminal device 620, and correspondingly, the terminal device 620 receives the request information that is of the reference signals and that is sent by the terminal device 610.

The request information is used to request to exchange configuration information with the terminal device 620. The request information indicates at least one of the following: a quantity of antennas, an antenna switching periodicity, a quantity of measurements performed by using an antenna (that is, a quantity of reference signals), total duration of the reference signals, duration of each reference signal, and a type of location information.

The quantity of antennas may be understood as a total quantity of antennas of the terminal device 610. The antenna switching periodicity may be understood as an antenna switching periodicity when the terminal device 610 receives the reference signals in the antenna switching manner. The type of the location information may include, for example, one or more of the following: phase information, the phase information and time information, phase difference information; the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

S602: The terminal device 620 sends the configuration information of the reference signals to the terminal device 610, and correspondingly, the terminal device 610 receives the configuration information that is of the reference signals and that is sent by the terminal device 620.

The terminal device 620 sends, based on the received request information, the configuration information used to respond to the request information, where the configuration information indicates at least one of the following: the antenna switching periodicity, the total duration of the reference signals, the duration of each reference signal, the quantity of reference signals, and the type of the location information.

S603: The terminal device 620 sends at least three reference signals based on the configuration information, and correspondingly, the terminal device receives the at least three reference signals based on the configuration information.

The terminal device 620 sends the reference signals based on information such as the total duration of the reference signals, the quantity of reference signals, and the duration of each reference signal that are indicated in the configuration information. For example, in S602, if the terminal device 620 indicates that the duration of each reference signal is 4 $\mu s$, and a total of three reference signals are sent, the terminal device 620 sends three reference signals, and duration of each reference signal is 4 $\mu s$.

It should be understood that the terminal device 620 should send the at least three reference signals by using the same antenna. For example, the terminal device 620 sends a first reference signal, a second reference signal, and a third reference signal by using a same antenna.

S604: The terminal device 610 receives the reference signals by using the plurality of antennas, to determine phase information.

The terminal device 610 may receive the reference signals in the antenna switching manner, to obtain a phase of a reference signal received by using each antenna. To reduce impact of a frequency shift, when performing antenna switching to measure a phase, the terminal device 610 ensures that a same antenna works at least twice or more.

For example, it is assumed that the terminal device 610 has two antennas, and the two antennas of the terminal device 610 are used to receive three reference signals. In other words, the terminal device 610 performs phase measurement three times, where one of the antennas performs phase measurement twice. For example, a first phase obtained through measurement at a moment $t_1$ by using a first antenna of the terminal device 610 is $\varphi_1(t_1)$, a second phase obtained through measurement at a moment $t_2$ by using a second antenna of the terminal device 610 is $\varphi_2(t_2)$, and a third phase obtained through measurement at a moment $t_3$ by using the first antenna of the terminal device 610 is $\varphi_1(t_3)$.

S605: The terminal device 610 sends the phase information and time information corresponding to the phase information to the terminal device 620, and correspondingly, the terminal device 620 receives the phase information and the time information corresponding to the phase information.

The terminal device 610 may report, to the terminal device 620, phase information obtained through measurement by using each antenna, and indicate measurement time information of each phase. Correspondingly, the terminal device 620 receives the phase information, or receives the phase information and the time information corresponding to the phase information.

In a possible implementation, the terminal device 610 may report merely the phase information to the terminal device 620, for example, $\varphi_1(t_1)$, $\varphi_2(t_2)$, and $\varphi_1(t_3)$, but does not directly report the time information corresponding to the phase information (that is, implicitly indicate the time information corresponding to the phase information). In some embodiments, when the terminal device 610 and the terminal device 620 exchange the configuration information, phase measurement time may be predefined. For example, the terminal device 610 and the terminal device 620 may predefine a measurement interval of a phase of each reference signal, for example, 1 $\mu s$ or 1-symbol duration. In this case, the terminal device 620 may determine the angle of arrival based on the received phase information by using Formula 6 and Formula 11.

In another possible implementation, the terminal device 610 may send the phase information and the time information corresponding to the phase information to the terminal device 620. For example, the phase information includes $\varphi_1(t_1)$, $\varphi_2(t_2)$, and $\varphi_1(t_3)$, and the time information corresponding to the phase information includes $t_1$, $t_2$, and $t_3$. In other words, the terminal device 610 directly indicates measurement time of the phase information. In this case, the terminal device 620 may determine, by using Formula 6 and Formula 11, the angle of arrival based on the phase information and the time information corresponding to the phase information that are received.

In addition, S605 may alternatively be: The terminal device 610 sends phase difference information and time difference information corresponding to the phase difference information to the terminal device 620. Correspondingly, the terminal device 620 receives the phase difference information and the time difference information corresponding to the phase difference information.

The terminal device 610 may report, to the terminal device 620, phase difference information obtained through measurement, and indicate time difference information corresponding to each phase difference. Correspondingly, the terminal device 620 receives the phase difference information, or receives the phase difference information and the time difference information corresponding to the phase difference information.

In a possible implementation, the terminal device 610 may report merely the phase difference information to the terminal device 620, for example, $\varphi_2(t_2)\text{-}\varphi_1(t_1)$ and $\varphi_1(t_3)\text{-}\varphi_1(t_1)$, but does not directly report the time information corresponding to the phase information (that is, implicitly indicate the time difference information corresponding to the phase difference information). In some embodiments, when the terminal device 610 and the terminal device 620 exchange the configuration information, phase measurement time may be predefined. For example, the terminal device 610 and the terminal device 620 may predefine a measurement interval of a phase of each reference signal, for example, 1 $\mu s$ or 1-symbol duration. In this case, the terminal device 620 may determine the angle of arrival based on the received phase difference information by using Formula 6 and Formula 11.

In another possible implementation, the terminal device 610 may send the phase difference information and the time difference information corresponding to the phase difference information to the terminal device 620. For example, the phase difference information includes $\varphi_2(t_2) - \varphi_1(t_1)$ and $\varphi_1(t_3)\text{-}\varphi_1(t_1)$, the time difference information corresponding to the phase difference information includes $t_2 \text{-} t_1$ and $t_3 - t_1$. In other words, the terminal device 610 directly indicates the time difference information of the phase difference information. In this case, the terminal device 620 may determine, by using Formula 6 and Formula 11, the angle of arrival based on the phase difference information and the time difference information corresponding to the phase difference information that are received.

It should be understood that a granularity of the time information and/or the time difference information is any one of the following: a sub-nanosecond, a nanosecond, a microsecond, symbol duration, slot duration, an LTE basic time unit, an NR basic time unit, and a baseband sampling time interval.

A time unit corresponding to a sub-nanosecond level is 0.1 *ns,* 0.2 *ns,* or the like, and corresponds to 0.X *ns,* where X is a positive integer less than 10. A time unit corresponding to a nanosecond level is 1 *ns,* 2 *ns,* or the like, and corresponds to Y *ns,* where Y is a positive integer less than 1000. A time unit corresponding to a microsecond level is 1 $\mu s$, 2 $\mu s$, or the like, and corresponds to Z $\mu s$, where Z is an integer less than 1000. A time unit of the symbol duration is 1-symbol duration, 2-symbol duration, or the like, and corresponds to H-symbol duration, where H is an integer less than 100. A time unit of the slot duration is 1-slot duration, 2-slot duration, or the like, and corresponds to J-slot duration, where J is an integer less than 100. The LTE basic time unit corresponds to 1 $T_s$, 2 $T_s$, or the like, and corresponds to M $T_s$, where M is a positive integer less than 1000. The NR basic time unit corresponds to 1 $T_c$, 2 $T_c$, or the like, and corresponds to N $T_c$, where N is an integer less than 1000. The baseband sampling time interval is a reciprocal of a baseband sampling rate.

$$T_s = \frac{1}{\Delta f_{ref} \times N_{f,ref}}$$

It should be noted that $T_s$ is the LTE basic time unit, and , $\Delta f_{ref}$ = 1.5×10$^4$*Hz,* and $N_{f,ref}$

$$T_c = \frac{1}{\Delta f_{max} \times N_f}$$

=2048 . $T_c$ is the NR basic time unit, and , $\Delta f_{max}$ = 4.8×10$^5$*Hz,* and $N_f$ =4096.

It should be further understood that the time information and/or the time difference information may be in many forms. In some embodiments, the time information and/or the time difference information may be absolute time information, for example, $t_1$, $t_2$, and $t_3$. In some embodiments, the time information and/or the time difference information may be relative time information based on specific time. If it is assumed that time of a 1$^{st}$ phase measurement value is a moment 0, other phase measurement time is equal to a time interval between the other phase measurement time and the 1$^{st}$ phase measurement value, for example, $t_2 - t_1$ and $t_3 - t_1$. In some embodiments, the time information and/or the time difference information may be a time difference between two phase measurement values, for example, $t_2 - t_1$ and $t_3 - t_2$. For example, 0.1 *ns* and 0.2 *ns* respectively indicate that an interval between 2$^{nd}$ phase measurement time and the 1$^{st}$ phase measurement time is 0.1 *ns,* and an interval between 3$^{rd}$ phase measurement time and the 2$^{nd}$ phase measurement time is 0.2 *ns.* In some embodiments, the time information and/or the time difference information may alternatively be sampling frequency information, for example, 1 MHz, indicating that a phase is measured at a frequency of 1 MHz, and a time interval between two corresponding adjacent phase measurement values is 1 $\mu s$. In some embodiments, if phase measurement is observed at an equal time interval, the terminal device 610 may directly indicate information about a time interval, for example, 1 $\mu s$, indicating that a time interval between two adjacent phase observation values is 1 $\mu s$.

Optionally, the terminal device 610 may alternatively report relative location information of antennas to the terminal device 620, that is, a distance between the antennas. For example, the relative location information may be a distance d between the first antenna and the second antenna in FIG. 3 and FIG. 4.

It may be understood that the terminal device 610 and the terminal device 620 need to establish a correspondence between the phase information and the relative location information of the antennas, or between the phase difference information and the relative location information of the antennas. In other words, regardless of the phase information, the phase difference information, or the relative location information of the antennas, these pieces of information need to indicate which antenna (or which two antennas) these pieces of information belong to, that is, need to be associated with an antenna identifier (or a reference signal identifier). The indication herein may include an explicit indication (that is, a direct indication) or an implicit indication (that is, an indirect indication). The explicit indication may be understood as directly reporting corresponding indication information, to indicate that the phase information, the phase difference information, or the relative location information of the antennas is directly sent in association with the antenna identifier (or the reference signal identifier). The implicit indication may be understood as not necessarily explicitly embodied and transferred in information, but transferred in another manner.

In an example, the phase information and the relative location information may be two lists in one-to-one correspondence. A 1st list represents the phase information, and a 2nd list represents the relative location information of the antennas. To be specific, each piece of phase information is directly associated with a piece of location information, and the phase information and the associated location information are sent in sequence. For example, a 1st phase corresponds to first antenna location information, and a 2nd phase corresponds to second antenna location information.

In another example, the phase difference information and the relative location information may also be two lists in one-to-one correspondence. A 1st list represents the phase information, and a 2nd list represents the relative location information of the antennas. In the list, there may be one phase difference directly associated with two pieces of location information, and the phase difference information and the associated location information are sent in sequence. For example, a first phase difference corresponds to 1st antenna location information and 2nd antenna location information.

S606: The terminal device 620 calculates the angle of arrival.

It should be understood that the terminal device 620 may calculate, by using Formula 6 and Formula 11, the angle of arrival based on the information received in S605. The information may be at least one of the following: the phase information, the phase information and the time information, the phase difference information, and the phase difference information and the time difference information.

In this embodiment of this application, at least one of the plurality of antennas of the terminal device is used to receive reference signals at least twice at different moments, the terminal device determines phase measurement results of the received reference signals, and sends the phase measurement results of the reference signals to another device, so that the another device can determine the angle of arrival based on the phase measurement results of different reference signals. Because a phase error caused by a frequency shift is considered for the angle of arrival, the angle of arrival obtained through calculation has higher precision, in other words, according to the method provided in this embodiment of this application, angle measurement precision in the sidelink positioning scenario can be improved.

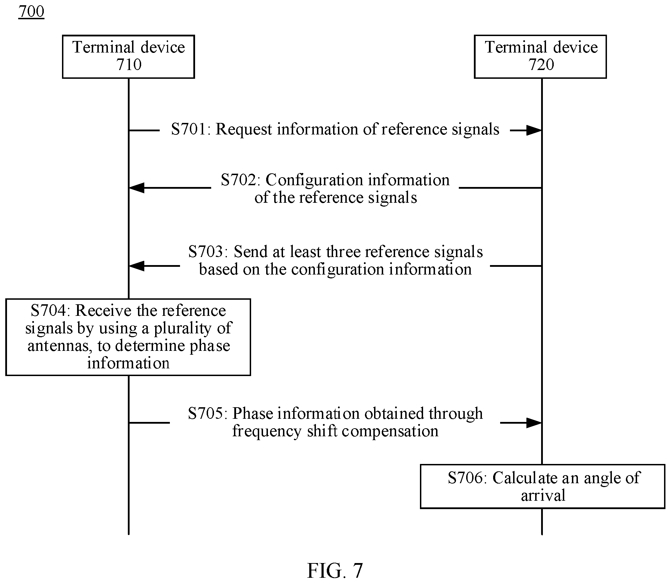

FIG. 7 is a schematic flowchart of another communication method according to an embodiment of this application. The method 700 shown in FIG. 7 may include S701 to S706, and mainly relates to a solution in which in a sidelink positioning scenario, a terminal device 720 (an example of the first device in FIG. 5) sends reference signals by using a same antenna, a plurality of antennas of a terminal device 710 (an example of the terminal device in FIG. 5) are used to measure phases of the received reference signals in an antenna switching manner, where at least one of the antennas is repeatedly used to measure the phases of the reference signals, the terminal device 710 determines phase measurement results of the reference signals, and the terminal device 720 completes solving of an angle of arrival based on the phase measurement results of the reference signals. The following describes in detail the steps in the method 700.

S701: The terminal device 710 sends request information of the reference signals to the terminal device 720, and correspondingly, the terminal device 720 receives the request information that is of the reference signals and that is sent by the terminal device 710.

S702: The terminal device 720 sends configuration information of the reference signals to the terminal device 710, and correspondingly, the terminal device 710 receives the configuration information that is of the reference signals and that is sent by the terminal device 720.

S703: The terminal device 720 sends at least three reference signals based on the configuration information, and correspondingly, the terminal device receives the at least three reference signals based on the configuration information.

S704: The terminal device 710 receives the reference signals by using the plurality of antennas, to determine phase information.

For S701 to S704, refer to S601 to S604. For brevity, details are not described herein again.

S705: The terminal device 710 sends phase information obtained through frequency shift compensation to the terminal device 720, and correspondingly, the terminal device 720 receives the phase information obtained through frequency shift compensation.

Before sending the information to the terminal device 720, the terminal device 710 may calculate a frequency shift estimation value and perform corresponding processing on the phase information obtained through measurement in S704.

The terminal device 710 may send the phase information obtained through frequency shift compensation to the terminal device 720. In other words, the terminal device 710 may report, based on frequency shift estimation on the phases obtained through measurement, reference phase information and the phase information obtained through frequency shift compensation. For example, the phase information obtained through frequency shift compensation may include a first phase and a compensated second phase, for example, $\varphi_1(t_1)$ and $(\varphi_2(t_2)-(2\pi(f_1-f_2)(t_2-t_1))\mathrm{mod}2\pi)\mathrm{mod}2\pi$, or $\varphi_1(t_1)$ and $\varphi_2(t_2)-2\pi(f_1-f_2)(t_2-t_1)$. In this case, the terminal device 710 does not need to include time information. In this way, the terminal device 720 may determine, by using Formula 6, the angle of arrival based on the received phase information obtained through frequency shift compensation.

In addition, S705 may alternatively be: The terminal device 710 sends phase difference information obtained through frequency shift compensation to the terminal device 720. Correspondingly, the terminal device 720 receives the phase difference information obtained through frequency shift compensation. The terminal device 710 reports the compensated phase difference information. For example, the reported compensated phase difference information is a phase difference between the first phase and the compensated second phase, for example, $((\varphi_2(t_2)-(2\pi(f_1-f_2)(t_2-t_1))\mathrm{mod}2\pi)\mathrm{mod}2\pi-\varphi_1(t_1))\mathrm{mod}2\pi$ or $\varphi_2(t_2)-\varphi_1(t_1)-2\pi(f_1-f_2)(t_2-t_1)$. In this case, the terminal device 710 does not need to include time information either. In this way, the terminal device 720 may determine, by using Formula 6, the angle of arrival based on the received phase difference information obtained through frequency shift compensation.

In addition, S705 may alternatively be: The terminal device 710 reports phase information and frequency shift information to the terminal device 720, and indicates measurement time information of each phase. Correspondingly, the terminal device 720 receives the phase information and the frequency shift information, or receives the phase information, time information corresponding to the phase information, and the frequency shift information. The frequency shift information indicates a difference between a signal frequency of the terminal device 710 and frequencies of a first reference signal, a second reference signal, and a third reference signal that are received by the terminal device 710, for example, the frequency shift information indicates $f_1 - f_2$.

In a possible implementation, the terminal device 710 may report the phase information and the frequency shift information to the terminal device 720. For example, the phase information may be, for example, $\varphi_1(t_1)$, $\varphi_2(t_2)$, and $\varphi_1(t_3)$, and the frequency shift information may be, for example, $f_1 - f_2$. In this case, the terminal device 710 does not need to directly report the time information corresponding to the phase information (that is, implicitly indicate measurement time of the phase information). In some embodiments, when the terminal device 710 and the terminal device 720 exchange the configuration information, phase measurement time may be predefined. For example, the terminal device 710 and the terminal device 720 may predefine a measurement interval of a phase of each reference signal, for example, 1 $\mu s$ or 1-symbol duration. In this case, the terminal device 710 may first determine, by using Formula 11, the frequency shift estimation value (for example, $f_1 - f_2$) based on phase measurement results obtained by measuring different reference signals, and report the phase information obtained through measurement and the frequency shift information to the terminal device 720, and the terminal device 720 may determine the direction angle based on Formula 6.

In a possible implementation, the terminal device 710 may report the phase information, the time information corresponding to the phase information, and the frequency shift information to the terminal device 720. For example, the phase information may be, for example, $\varphi_1(t_1)$, $\varphi_2(t_2)$, and $\varphi_1(t_3)$, the time information corresponding to the phase information may be, for example, $t_1$, $t_2$, and $t_3$, and the frequency shift information may be, for example, $f_1 - f_2$. In this case, the terminal device 710 may first determine, by using Formula 11, the frequency shift estimation value (for example, $f_1 - f_2$) based on phase measurement results obtained by measuring different reference signals, and report the phase information obtained through measurement, the time information corresponding to the phase information, and the frequency shift information to the terminal device 720, and the terminal device 720 may determine the angle of arrival based on Formula 6.

In addition, S705 may alternatively be: The terminal device 710 reports phase difference information obtained through measurement and frequency shift information to the terminal device 720, and indicates time difference information corresponding to each phase difference. Correspondingly, the terminal device 720 receives the phase difference information and the frequency shift information, or receives the phase difference information, the time difference information corresponding to the phase difference information, and the frequency shift information. The frequency shift information indicates a difference between a signal frequency of the terminal device 710 and frequencies of a first reference signal, a second reference signal, and a third reference signal that are received by the terminal device 710, for example, the frequency shift information indicates $f_1 - f_2$.

In a possible implementation, the terminal device 710 may report the phase difference information and the frequency shift information to the terminal device 720. For example, the phase difference information may be, for example, $\varphi_2(t_2)-\varphi_1(t_1)$ and $\varphi_1(t_3)-\varphi_1(t_1)$, and the frequency shift information may be, for example, $f_1 - f_2$. In this case, the terminal device 710 does not need to directly report the time difference information corresponding to the phase difference information (that is, implicitly indicate the time difference information corresponding to the phase difference information). In some embodiments, when the terminal device 710 and the terminal device 720 exchange the configuration information, phase measurement time may be predefined. For example, the terminal device 710 and the terminal device 720 may predefine a measurement interval of a phase of each reference signal, for example, 1 $\mu s$ or 1-symbol duration. In this case, the terminal device 710 may first determine, by using Formula 11, the frequency shift estimation value (for example, $f_1 - f_2$) based on phase measurement results obtained by measuring different reference signals, and report the phase difference information and the frequency shift information to the terminal device 720, and the terminal device 720 may determine the angle of arrival based on Formula 6.

In a possible implementation, the terminal device 710 may report the phase difference information, the time difference information corresponding to the phase difference information, and the frequency shift information to the terminal device 720. The phase difference information may be, for example, $\varphi_2(t_2)-\varphi_1(t_1)$ and $\varphi_1(t_3)-\varphi_1(t_1)$, the time difference information corresponding to the phase difference information may be, for example, $t_2 - t_1$ and $t_3 - t_1$, and the frequency shift information may be, for example, $f_1 - f_2$. In this case, the terminal device 710 may first determine, by using Formula 11, the frequency shift estimation value (for example, $f_1 - f_2$) based on phase measurement results obtained by measuring different reference signals, and report the phase difference information, the time difference information corresponding to the phase difference information, and the frequency shift information to the terminal device 720, and the terminal device 720 may determine the angle of arrival based on Formula 6.

For related descriptions of the time information and/or the time difference information in this step, refer to S605. Details are not described herein again.

S706: The terminal device 720 calculates the angle of arrival.

It should be understood that the terminal device 720 may calculate, by using Formula 6 and/or Formula 11, the angle of arrival based on the information received in S705. The information may be at least one of the following: the phase information and the frequency shift information, the phase information, the time information, and the frequency shift information, the phase difference information and the frequency shift information, the phase difference information, the time difference information, and the frequency shift information, compensated phase information, and compensated phase difference information.

In this embodiment of this application, at least one of the plurality of antennas of the terminal device is used to receive reference signals at least twice at different moments, the terminal device determines phase measurement results of the received reference signals, performs frequency shift estimation based on the phase measurement results, and sends the phase measurement results of the reference signals and frequency shift estimation results to another device, so that the another device can determine the angle of arrival based on the phase measurement results of the reference signals and the frequency shift estimation results. Because a phase error caused by a frequency shift is considered for the angle of arrival, the angle of arrival obtained through calculation has higher precision, in other words, according to the method provided in this embodiment of this application, angle measurement precision in the sidelink positioning scenario can be improved.

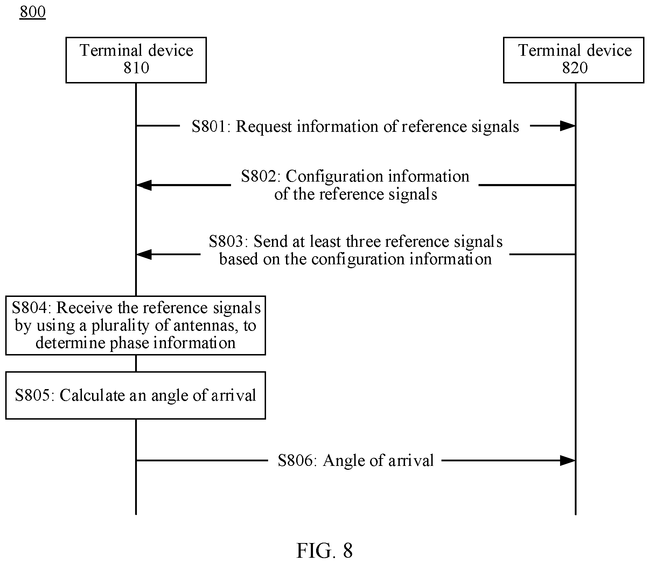

FIG. 8 is a schematic flowchart of another communication method according to an embodiment of this application. The method 800 shown in FIG. 8 may include S801 to S806, and mainly relates to a sidelink positioning scenario in which a terminal device 820 (an example of the first device in FIG. 5) sends reference signals by using a same antenna, a plurality of antennas of a terminal device 810 (an example of the terminal device in FIG. 5) are used to measure phases of the received reference signals in an antenna switching manner, where at least one of the antennas is repeatedly used to measure the phases of the reference signals, and the terminal device 810 determines phase measurement results of the reference signals. The terminal device 810 determines an angle of arrival based on the phase measurement results of the reference signals, and sends the angle of arrival to the terminal device 820. The following describes in detail the steps in the method 800.

S801: The terminal device 810 sends request information of the reference signals to the terminal device 820, and correspondingly, the terminal device 820 receives the request information that is of the reference signals and that is sent by the terminal device 810.

S802: The terminal device 820 sends configuration information of the reference signals to the terminal device 810, and correspondingly, the terminal device 810 receives the configuration information that is of the reference signals and that is sent by the terminal device 820.

S803: The terminal device 820 sends at least three reference signals based on the configuration information, and correspondingly, the terminal device receives the at least three reference signals based on the configuration information.

S804: The terminal device 810 receives the reference signals by using the plurality of antennas, to determine phase information.

For S801 to S804, refer to S601 to S604. For brevity, details are not described herein again.

S805: The terminal device 810 calculates the angle of arrival.

It should be understood that the terminal device 810 may calculate, by using Formula 6 and Formula 11, the angle of arrival based on at least one of the following content obtained through measurement: the phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

For specific content of this step, refer to S502. Details are not described herein again.

S806: The terminal device 810 sends the calculated angle of arrival to the terminal device 820, and correspondingly, the terminal device 820 receives the angle of arrival sent by the terminal device 810.

By way of example and not limitation, it is assumed that in an ideal case, a carrier frequency $f_c$ is 3 GHz, a distance $d$ between an antenna 1 and an antenna 2 is 5 *cm,* and a real direction angle $\theta$ is 50°. When $e_1 - e_2 = 8ppm$ and $t_2 - t_1 = 4\mu s,$ as described above, if frequency shift compensation is not performed, the direction angle obtained through calculation by using Formula 6 is 73°. However, if the antenna 1 is used again to observe a phase at the moment $t_3$, and $t_3 - t_2 = 4\mu s$, a phase difference $\Delta\hat{\varphi}_1, (t_1, t_3) = 1.2 rad$ between the moment $t_3$ and the moment $t_1$ is obtained, an estimated frequency shift is

$$f_1 - f_2 = \frac{1.2}{2\pi \times 8 \times 10^{-6}} = 2.38 \times 10^4$$

, and the direction angle is approximately 50° through calculation by using Formula 6. In other words, a more accurate direction angle can be obtained according to the method provided in this embodiment of this application.

In this embodiment of this application, at least one of the plurality of antennas of the terminal device is used to receive reference signals at least twice at different moments, the terminal device determines phase measurement results of the received reference signals, determines the angle of arrival based on the phase measurement results of the reference signals, and sends the angle of arrival to another device. Because a phase error caused by a frequency shift is considered during determining of the angle of arrival, the angle of arrival obtained through calculation has higher precision, in other words, according to the method provided in this embodiment of this application, angle measurement precision in the sidelink positioning scenario can be improved.

FIG. 9 is a schematic flowchart of another communication method according to an embodiment of this application. The method 900 shown in FIG. 9 may include S901 to S905, and mainly relates to a sidelink positioning scenario in which a terminal device 920 (an example of the first device in FIG. 5) sends reference signals by using a plurality of antennas, and at least one of the antennas is repeatedly used to send the reference signal at least once. A terminal device 910 (an example of the terminal device in FIG. 5) measures phases of the received reference signals by using a same antenna, to determine phase measurement results of the reference signals, and the terminal device 920 completes solving of an angle of departure based on the phase measurement results of the reference signals. The following describes in detail the steps in the method 900.

S901: The terminal device 920 sends configuration information of the reference signals to the terminal device 910, and correspondingly, the terminal device 910 receives the configuration information that is of the reference signals and that is sent by the terminal device 920.

The configuration information indicates at least one of the following: total duration of the reference signals, duration of each reference signal, a quantity of reference signals, and a type of location information.

The quantity of antennas may be understood as a total quantity of antennas of the terminal device 920. An antenna switching periodicity may be understood as an antenna switching periodicity when the terminal device 920 sends the reference signals in an antenna switching manner. The type of the location information may include, for example, one or more of the following: phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

S902: The terminal device 920 sends the reference signals by using the plurality of antennas.

It should be understood that at least one of the plurality of antennas of the terminal device 920 works twice or more, that is, the at least one of the plurality of antennas of the terminal device 920 is used to send the reference signals at least twice.

For example, the terminal device 920 sends a first reference signal by using a first antenna, sends a second reference signal by using a second antenna, and sends a third reference signal by using the first antenna. More specifically, the terminal device 920 sends the first reference signal through a first port, sends the second reference signal through a second port, and sends the third reference signal through a third port. Both the first reference signal sent through the first port and the third reference signal sent through the third port are sent by using the first antenna of the terminal device 920, and the second reference signal sent through the second port is sent by using the second antenna of the terminal device 920.

For related content of this step, refer to S501. Details are not described herein again.

S903: The terminal device 910 receives the reference signals, to determine phase information.

It should be understood that the terminal device 910 receives and measures, by using a same antenna, a phase of each reference signal sent by the terminal device 920, to determine phase information.

For example, a first phase obtained by the terminal device 910 by measuring a phase of the first reference signal at a moment $t_1$ is $\varphi_1(t_1)$, a second phase obtained by the terminal device 910 by measuring a phase of the second reference signal at a moment $t_2$ is $\varphi_2(t_2)$, and a third phase obtained by the terminal device 910 by measuring a phase of the third reference signal at a moment $t_3$ is $\varphi_1(t_3)$.

S904: The terminal device 910 sends the phase information and time information corresponding to the phase information to the terminal device 920, and correspondingly, the terminal device 920 receives the phase information and the time information corresponding to the phase information.

S904 may be: The terminal device 910 sends phase information to the terminal device 920. Correspondingly, the terminal device 920 receives the phase information.

S904 may be: The terminal device 910 sends phase difference information to the terminal device 920. Correspondingly, the terminal device 920 receives the phase difference information.

S904 may alternatively be: The terminal device 910 sends phase difference information and time difference information to the terminal device 920. Correspondingly, the terminal device 920 receives the phase difference information and the time difference information.

For specific content of this step, refer to S605. For brevity, details are not described herein again.

S905: The terminal device 920 calculates the angle of departure.

It should be understood that the terminal device 920 may calculate, by using Formula 6 and Formula 11, the angle of departure based on the information received in S904. The information may be at least one of the following: the phase information, the phase information and the time information, the phase difference information, and the phase difference information and the time difference information.

In this embodiment of this application, the terminal device may receive the plurality of reference signals sent by using different antennas, and at least two of the plurality of reference signals are sent by using a same antenna. The terminal device may measure the phases of the received reference signals to determine the phase measurement results of the reference signals, and send the phase measurement results of the different reference signals to another device, so that the another device can determine the angle of departure based on the phase measurement results of the different reference signals. Because a phase error caused by a frequency shift is considered during determining of the angle of departure, the angle of departure obtained through calculation has higher precision, in other words, according to the method provided in this embodiment of this application, angle measurement precision in the sidelink positioning scenario can be improved.

FIG. 10 is a schematic flowchart of another communication method according to an embodiment of this application. The method 1000 shown in FIG. 10 may include S1001 to S1005, and mainly relates to a sidelink positioning scenario in which a terminal device 1020 (an example of the first device in FIG. 5) sends reference signals by using a plurality of antennas, and at least one of the antennas is repeatedly used to send the reference signal at least once. A terminal device 1010 (an example of the terminal device in FIG. 5) measures phases of the received reference signals by using a same antenna, to determine phase measurement results of the reference signals, and the terminal device 1020 completes solving of an angle of departure based on the phase measurement results of the reference signals. The following describes in detail the steps in the method 1000.

S1001: The terminal device 1020 sends configuration information of the reference signals to the terminal device 1010, and correspondingly, the terminal device 1010 receives the configuration information that is of the reference signals and that is sent by the terminal device 1020.

It should be understood that the configuration information indicates at least one of the following: total duration of the reference signals, duration of each reference signal, a quantity of reference signals, and a type of location information. In addition, the configuration information may further indicate which reference signals are sent by using a same antenna.

For example, the configuration information may directly indicate which reference signals are sent by using an antenna. For example, the configuration information indicates that a first reference signal and a third reference signal are sent by using a same antenna. The configuration information may indicate, based on identification information of the reference signals, which reference signals are sent by using a same antenna. In other words, the configuration information indicates identification information carried in the reference signals sent by using the same antenna. The identification information may be, for example, one or more of the following content: an antenna identifier, a port identifier, a reference signal ID identifier, a reference signal set ID identifier, a reference signal resource ID, and a reference signal resource set ID. In addition, the reference signal may carry an antenna identifier that identifies sending of the reference signal or a port identifier that identifies sending of the reference signal.

S1002: The terminal device 1020 sends the reference signals by using the plurality of antennas.

It should be understood that at least one of the plurality of antennas of the terminal device 1020 works twice or more, that is, the at least one antenna is used to send the reference signals at least twice.

For related content of this step, refer to S501 and S902. Details are not described herein again.

S1003: The terminal device 1010 receives the reference signals, to determine phase information.

It should be understood that the terminal device 1010 receives and measures a phase of each reference signal by using a same antenna, to determine phase information.

For example, a first phase obtained by the terminal device 1010 by measuring a phase of the first reference signal at a moment $t_1$ is $\varphi_1(t_1)$, a second phase obtained by the terminal device 1010 by measuring a phase of the second reference signal at a moment $t_2$ is $\varphi_2(t_2)$, and a third phase obtained by the terminal device 1010 by measuring a phase of the third reference signal at a moment $t_3$ is $\varphi_1(t_3)$.

S1004: The terminal device 1010 sends phase information obtained through frequency shift compensation to the terminal device 1020, and correspondingly, the terminal device 1020 receives the phase information obtained through frequency shift compensation.

S1004 may be: The terminal device 1010 sends phase difference information obtained through frequency shift compensation to the terminal device 1020. Correspondingly, the terminal device 1020 receives the phase difference information obtained through frequency shift compensation.

S1004 may be: The terminal device 1010 sends the phase information and frequency shift information to the terminal device 1020. Correspondingly, the terminal device 1020 receives the phase information and the frequency shift information.

S1004 may be: The terminal device 1010 sends the phase information, time information corresponding to the phase information, and frequency shift information to the terminal device 1020. Correspondingly, the terminal device 1020 receives the phase information, the time information corresponding to the phase information, and the frequency shift information.

S1004 may be: The terminal device 1010 sends phase difference information and frequency shift information to the terminal device 1020. Correspondingly, the terminal device 1020 receives the phase difference information and the frequency shift information.

S1004 may alternatively be: The terminal device 1010 sends phase difference information, time difference information corresponding to the phase difference information, and frequency shift information to the terminal device 1020. Correspondingly, the terminal device 1020 receives the phase difference information, the time difference information corresponding to the phase difference information, and the frequency shift information.

For specific content of this step, refer to S705. For brevity, details are not described herein again.

S1005: The terminal device 1020 calculates the angle of departure.

It should be understood that the terminal device 1020 may calculate, by using Formula 6 and/or Formula 11, the angle of departure based on the information received in S1004. The information may be at least one of the following: the phase information and the frequency shift information, the phase information, the time information, and the frequency shift information, the phase difference information and the frequency shift information, the phase difference information, the time difference information, and the frequency shift information, compensated phase information, and compensated phase difference information.

In this embodiment of this application, the terminal device may receive the plurality of reference signals sent by using different antennas, and at least two of the plurality of reference signals are sent by using a same antenna. The terminal device may measure the phases of the received reference signals to determine the phase measurement results of the reference signals, perform frequency shift estimation based on the phase measurement results, and send the phase measurement results of the reference signals and frequency shift estimation results to another device, so that the another device can determine the angle of departure based on the phase measurement results of the reference signals and the frequency shift estimation results. Because a phase error caused by a frequency shift is considered for the angle of departure, the angle of departure obtained through calculation has higher precision, in other words, according to the method provided in this embodiment of this application, angle measurement precision in the sidelink positioning scenario can be improved.

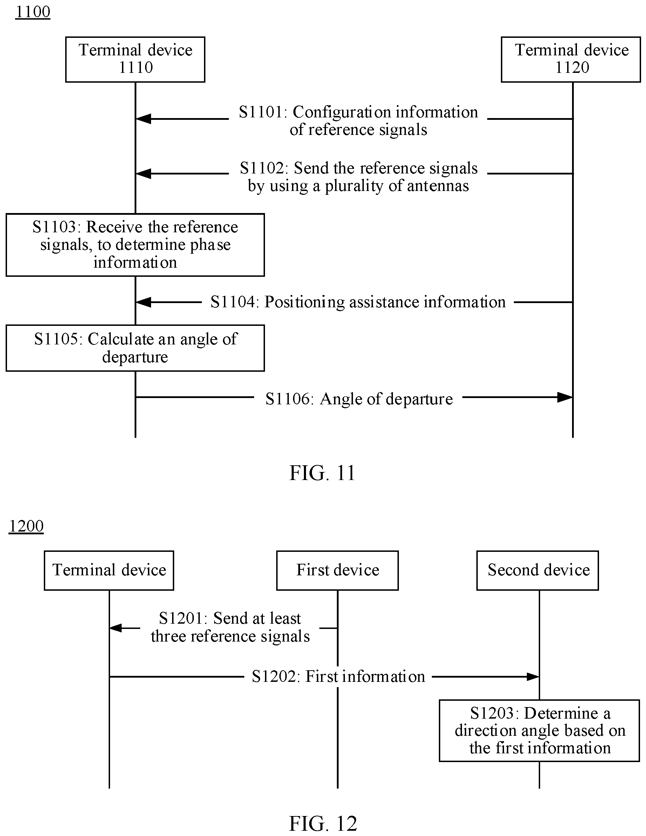

FIG. 11 is a schematic flowchart of another communication method according to an embodiment of this application. The method 1100 shown in FIG. 11 may include S1101 to S1106, and mainly relates to a sidelink positioning scenario in which a terminal device 1120 (an example of the first device in FIG. 5) sends reference signals by using a plurality of antennas, and at least one of the antennas is repeatedly used to send the reference signal at least once. A terminal device 1110 (an example of the terminal device in FIG. 5) measures phases of the received reference signals by using a same antenna, to determine phase measurement results of the reference signals based on the phases obtained through measurement. The terminal device 1110 determines an angle of departure based on the phase measurement results of the reference signals, and sends the angle of departure to the terminal device 1120. The following describes in detail the steps in the method 1100.

S1101: The terminal device 1120 sends configuration information of the reference signals to the terminal device 1110, and correspondingly, the terminal device 1110 receives the configuration information that is of the reference signals and that is sent by the terminal device 1120.

For related content of this step, refer to S1001. Details are not described herein again.

S1102: The terminal device 1120 sends the reference signals by using the plurality of antennas.

It should be understood that at least one of the plurality of antennas of the terminal device 1120 works twice or more, that is, the at least one antenna is used to send the reference signals at least twice.

For related content of this step, refer to S501 and S902. Details are not described herein again.

S1103: The terminal device 1110 receives the reference signals, to determine phase information.

It should be understood that the terminal device 1110 receives and measures a phase of each reference signal by using a same antenna, to determine phase information.

For example, a first phase obtained by the terminal device 1110 by measuring a phase of a first reference signal at a moment $t_1$ is $\varphi_1(t_1)$, a second phase obtained by the terminal device 1110 by measuring a phase of a second reference signal at a moment $t_2$ is $\varphi_2(t_2)$, and a third phase obtained by the terminal device 1110 by measuring a phase of a third reference signal at a moment $t_3$ is $\varphi_1(t_3)$.

S1104: The terminal device 1120 sends positioning assistance information to the terminal device 1110, and correspondingly, the terminal device 1110 receives the positioning assistance information sent by the terminal device 1120.

It should be understood that the positioning assistance information indicates a relative location of an antenna of the terminal device 1120.

For example, if the terminal device 1120 includes two antennas that are identified as a first antenna and a second antenna, the positioning assistance information indicates relative locations of the first antenna and the second antenna. If the terminal device 1120 includes three antennas that are identified as a first antenna, a second antenna, and a third antenna, the positioning assistance information indicates relative locations of the first antenna, the second antenna, and the third antenna.

It should be understood that, when the positioning assistance information is reported, relative locations of two specific antennas indicated by the positioning assistance information may also be indicated. An indication manner includes an explicit indication or an implicit indication. The explicit indication means that indication information may also be reported when the positioning assistance information is reported. The indication information indicates relative locations of two specific antennas indicated by the positioning assistance information, for example, is associated with identification information carried in a reference signal sent by using an antenna. The identification information may be, for example, one or more of the following content: an antenna identifier, a port identifier, a reference signal ID identifier, a reference signal set ID identifier, a reference signal resource ID, and a reference signal resource set ID. The implicit indication may be, for example, used to determine relative locations of two specific antennas based on an order of reporting the positioning assistance information.

It should be noted that relative locations of antennas may be a distance between the antennas, or may be coordinates of the antennas in a specific coordinate system. For example, if a plurality of antennas form a linear array, a distance between the antennas may be provided. If a plurality of antennas form a planar array, specific coordinates need to be provided.

The distance or the coordinates may be in a form of an absolute value, and units of the coordinates may be millimeter, centimeter, decimeter, meter, or the like. The distance and a location may alternatively be converted by using a wavelength value at a frequency. For example, if a distance between the first antenna and the second antenna is 10 *cm,* and a reference wavelength is 10 *cm,* the distance may be represented by 1.

It may be understood that the positioning assistance information and the configuration information of the reference signals may be sent to the terminal device 1110 by using one piece of signaling (that is, sent to the terminal device 1110 in S1101), or may be sent to the terminal device 1110 by using a plurality of pieces of signaling, and a sending order of the positioning assistance information is not limited.

S1105: The terminal device 1110 calculates the angle of departure.

It should be understood that the terminal device 1110 may calculate the angle of departure based on at least one of the following content obtained through measurement: the phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

For specific content of this step, refer to S502. Details are not described herein again.

S1106: The terminal device 1110 sends the calculated angle of departure to the terminal device 1120, and correspondingly, the terminal device 1120 receives the angle of departure sent by the terminal device 1110.

In this embodiment of this application, the terminal device may receive the plurality of reference signals sent by using different antennas, and at least two of the plurality of reference signals are sent by using a same antenna. The terminal device may measure the phases of the received reference signals to determine the phase measurement results of the reference signals, determine the angle of departure based on the phase measurement results of the different reference signals, and send the angle of departure to another device. Because a phase error caused by a frequency shift is considered for the angle of departure, the angle of departure obtained through calculation has higher precision, in other words, according to the method provided in this embodiment of this application, angle measurement precision in the sidelink positioning scenario can be improved.

FIG. 12 is a schematic flowchart of another communication method according to an embodiment of this application.

As shown in FIG. 12, the method 1200 relates to interaction among a terminal device, a first device, and a second device.

In an example, if the method 1200 is applied to a sidelink positioning scenario, the first device may be a terminal device or a road side unit RSU, and the second device may be a positioning management device (for example, LMF).

For example, if the method 1200 is applied to the sidelink positioning scenario shown in FIG. 2, the terminal device may be the terminal device 210 shown in FIG. 2, the first device may be the device 220 shown in FIG. 2, and the second device may be the positioning management device 230 shown in FIG. 2.

In another example, if the method 1200 is applied to a cellular positioning scenario, the first device may be an access network device, and the second device may be a positioning management device.

For example, if the method 1200 is applied to the cellular positioning scenario shown in FIG. 2, the terminal device may be the terminal device 210 shown in FIG. 2, the first device may be the device 220 shown in FIG. 2, and the second device may be the positioning management device 230 shown in FIG. 2.

For example, the method 1200 shown in FIG. 12 includes S1201 to S1203. The following describes in detail the steps in the method 1200.

S1201: The first device sends at least three reference signals, and correspondingly, the terminal device receives the at least three reference signals.

S1202: The terminal device sends first information, and correspondingly, the second device receives the first information.

For specific content of S1201 and S1202, refer to S501 and S502 respectively. Details are not described herein again.

S1203: The second device determines a direction angle based on the first information.

It should be understood that the second device may calculate the direction angle based on the received first information by using Formula 6 and/or Formula 11. The first information may be at least one of the following: phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

In conclusion, the terminal device receives the at least three reference signals, and sends the first information indicating the direction angle, so that the second device can obtain the direction angle based on the first information. Because at least two of the at least three reference signals are sent or received by using a same antenna, and the first information is determined based on phase measurement results of the at least three reference signals, the terminal device or the second device may determine, based on the first information, a phase error caused by a frequency shift, to improve angle measurement precision.

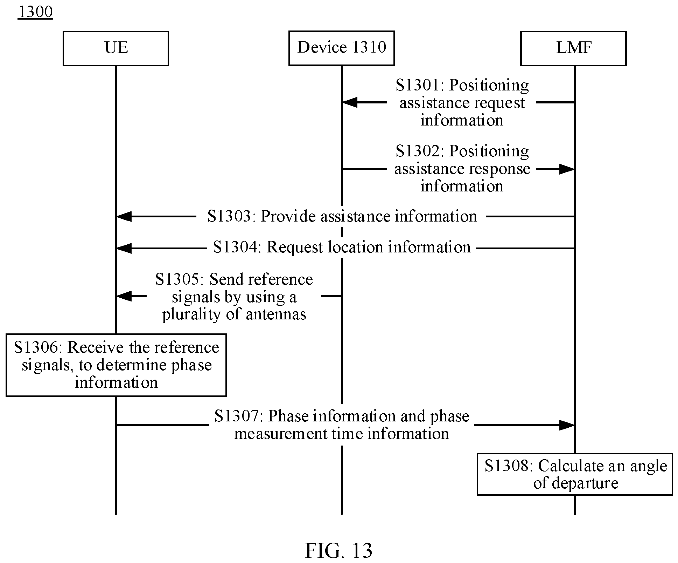

FIG. 13 is a schematic flowchart of another communication method according to an embodiment of this application. The method 1300 shown in FIG. 13 may include step S1301 to step S1308 and relates to a cellular or sidelink positioning scenario in which a device 1310 (an example of the first device in FIG. 12) sends reference signals by using a plurality of antennas, and at least one of the antennas is repeatedly used to send the reference signal at least once. UE (an example of the terminal device in FIG. 12) measures phases of the received reference signals by using a same antenna, to determine phase measurement results of the reference signals. An LMF (an example of the second device in FIG. 12) may complete solving of an angle of departure based on the phase measurement results of the reference signals. In this application, there may be a plurality of devices 1310, and a location of the UE may be uniquely determined via the plurality of devices 1310. The following describes in detail the steps in the method 1300.

S1301: The LMF sends positioning assistance request information to the device 1310, and correspondingly, the device 1310 receives the positioning assistance request information.

The positioning assistance request information indicates at least one of the following: configuration information of the reference signals, geographical location information, relative location information of an antenna in each device 1310, and the like.

The configuration information of the reference signals indicates at least one of the following: total duration of the reference signals, duration of each reference signal, a quantity of reference signals, and a type of location information. The type of the location information may include, for example, one or more of the following: phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information. In addition, the configuration information of the reference signals may further indicate which reference signals are sent by using a same antenna.

For example, the configuration information may directly indicate which reference signals are sent by using an antenna. For example, the configuration information indicates that a first reference signal and a third reference signal are sent by using a same antenna. The configuration information may indicate, based on identification information of the reference signals, which reference signals are sent by using a same antenna. In other words, the configuration information indicates identification information carried in the reference signals sent by using the same antenna. The identification information may be, for example, one or more of the following content: an antenna identifier, a port identifier, a reference signal ID identifier, a reference signal set ID identifier, a reference signal resource ID, and a reference signal resource set ID. In addition, the reference signal may carry an antenna identifier that identifies sending of the reference signal or a port identifier that identifies sending of the reference signal.

S1302: The device 1310 sends positioning assistance response information to the LMF, and correspondingly, the LMF receives the positioning assistance response information.

The device 1310 sends, based on the received positioning assistance request information, the positioning assistance response information used to respond to the positioning assistance request information.

S1303: The LMF sends assistance information to the UE, and correspondingly, the UE receives the assistance information sent by the LMF.

The assistance information indicates at least one of the following: the total duration of the reference signals, the duration of each reference signal, and the quantity of reference signals.

It should be understood that, after the LMF and the device 1310 complete exchanging the positioning assistance information in S1301 and S1302, information such as the total duration of the reference signals, the duration of each reference signal, and the quantity of reference signals may be determined.

S1304: The LMF sends request location information to the UE, and correspondingly, the UE receives the request location information.

It should be understood that the request location information indicates a type of reported location information. The type of the location information may include one or more of the following: phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

S1305: The device 1310 sends the reference signals by using the plurality of antennas.

It should be understood that at least one of the plurality of antennas of the device 1310 works twice or more, that is, the at least one antenna is used to send the reference signals at least twice.

For related content of this step, refer to S501 and S901. Details are not described herein again.

S1306: The UE receives the reference signals, to determine phase information.

It should be understood that the UE receives and measures a phase of each reference signal by using a same antenna, to determine phase information.

For example, a first phase obtained by the UE by measuring a phase of the first reference signal at a moment $t_1$ is $\varphi_1(t_1)$, a second phase obtained by the UE by measuring a phase of a second reference signal at a moment $t_2$ is $\varphi_2(t_2)$, and a third phase obtained by the UE by measuring a phase of the third reference signal at a moment $t_3$ is $\varphi_1(t_3)$.

S1307: The UE sends the phase information and time information corresponding to the phase information to the LMF, and correspondingly, the LMF receives the phase information and the time information corresponding to the phase information.

S1307 may be: The UE sends the phase information to the LMF. Correspondingly, the LMF receives the phase information.

S1307 may be: The UE sends phase difference information to the LMF. Correspondingly, the LMF receives the phase difference information.

S1307 may alternatively be: The UE sends phase difference information and time difference information to the LMF. Correspondingly, the LMF receives the phase difference information and the time difference information.

For specific content of this step, refer to S605. For brevity, details are not described herein again.

S1308: The LMF calculates the angle of departure.

It should be understood that the LMF may calculate, by using Formula 6 and Formula 11, the angle of departure based on the information received in S1307. The information may be at least one of the following: the phase information, the phase information and the time information, the phase difference information, and the phase difference information and the time difference information.

It should be further understood that the LMF may determine a location of the terminal device based on information about a plurality of angles of departure reported by the UE.

In this embodiment of this application, the UE may receive, by using a same antenna, the plurality of reference signals sent by using different antennas of the device 1310, and at least two of the plurality of reference signals are sent by using a same antenna of the device 1310. The UE may measure the phases of the received reference signals to determine the phase measurement results of the different reference signals, and send the phase measurement results of the different reference signals to the LMF, so that the LMF can determine the angle of departure based on the phase measurement results of the different reference signals. Because a phase error caused by a frequency shift is considered during determining of the angle of departure, the angle of departure obtained through calculation has higher precision. Further, because there may be the plurality of devices 1310, there may also be a plurality of determined angles of departure, so that the LMF may determine the location of the terminal device based on the plurality of angles of departure.

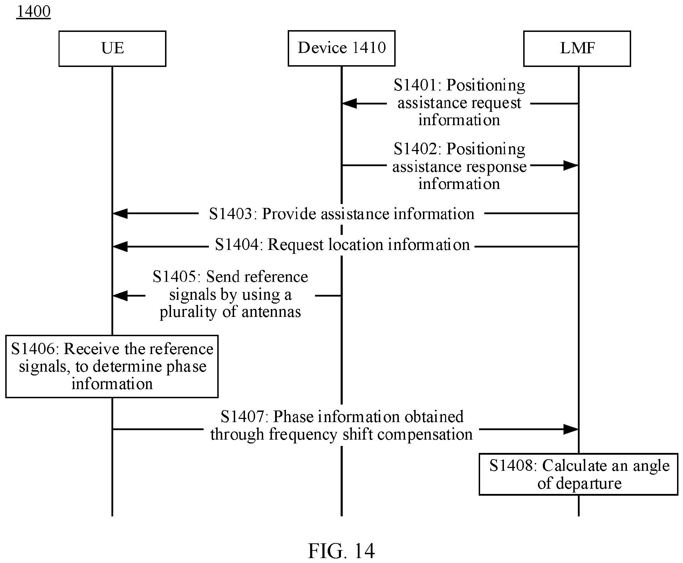

FIG. 14 is a schematic flowchart of another communication method according to an embodiment of this application. The method 1400 shown in FIG. 14 may include step S1401 to step S1408 and relates to a cellular or sidelink positioning scenario in which a device 1410 (an example of the first device in FIG. 12) sends reference signals by using a plurality of antennas, and at least one of the antennas is repeatedly used to send the reference signal at least once. UE (an example of the terminal device in FIG. 12) measures phases of the received reference signals by using a same antenna, to determine phase measurement results of the reference signals. An LMF (an example of the second device in FIG. 12) may complete solving of an angle of departure based on the phase measurement results of the reference signals. In this application, there may be a plurality of devices 1410, and a location of the UE may be uniquely determined via the plurality of devices 1410. The following describes in detail the steps in the method 1400.

S1401: The LMF sends positioning assistance request information to the device 1410, and correspondingly, the device 1410 receives the positioning assistance request information.

S1402: The device 1410 sends positioning assistance response information to the LMF, and correspondingly, the LMF receives the positioning assistance response information.

For S1401 and S1402, refer to S1301 and S1302. For brevity, details are not described herein again.

S1403: The LMF sends assistance information to the UE, and correspondingly, the UE receives the assistance information sent by the LMF.

The assistance information indicates at least one of the following: total duration of the reference signals, duration of each reference signal, and a quantity of reference signals. In addition, the assistance information may further indicate which reference signals are sent by using a same antenna.

For example, assistance information may directly indicate which reference signals are sent by using an antenna. For example, the configuration information indicates that a first reference signal and a third reference signal are sent by using a same antenna. The configuration information may indicate, based on identification information of the reference signals, which reference signals are sent by using a same antenna. In other words, the configuration information indicates identification information carried in the reference signals sent by using the same antenna. The identification information may be, for example, one or more of the following content: an antenna identifier, a port identifier, a reference signal ID identifier, a reference signal set ID identifier, a reference signal resource ID, and a reference signal resource set ID. In addition, the reference signal may carry an antenna identifier that identifies sending of the reference signal or a port identifier that identifies sending of the reference signal.

S1404: The LMF sends request location information to the UE, and correspondingly, the UE receives the request location information.

It should be understood that the request location information indicates a type of reported location information. The type of the location information may include, for example, one or more of the following: phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

S1405: The device 1410 sends the reference signals by using the plurality of antennas.

It should be understood that at least one of the plurality of antennas of the device 1410 works twice or more, that is, the at least one antenna is used to send the reference signals at least twice.

For related content of this step, refer to S501 and S901. Details are not described herein again.

S1406: The UE receives the reference signals, to determine phase information.

It should be understood that the UE receives and measures a phase of each reference signal by using a same antenna, to determine phase information.

For example, a first phase obtained by the UE by measuring a phase of the first reference signal at a moment $t_1$ is $\varphi_1(t_1)$, a second phase obtained by the UE by measuring a phase of a second reference signal at a moment $t_2$ is $\varphi_2(t_2)$, and a third phase obtained by the UE by measuring a phase of the third reference signal at a moment $t_3$ is $\varphi_1(t_3)$.

S1407: The UE sends phase information obtained through frequency shift compensation to the LMF, and correspondingly, the LMF receives the phase information obtained through frequency shift compensation.

S1407 may be: The UE sends phase difference information obtained through frequency shift compensation to the LMF. Correspondingly, the LMF receives the phase difference information obtained through frequency shift compensation.

S1407 may be: The UE sends the phase information and frequency shift information to the LMF. Correspondingly, the LMF receives the phase information and the frequency shift information.

S1407 may be: The UE sends the phase information, time information corresponding to the phase information, and frequency shift information to the LMF. Correspondingly, the LMF receives the phase information, the time information corresponding to the phase information, and the frequency shift information.

S1407 may be: The UE sends phase difference information and frequency shift information to the LMF. Correspondingly, the LMF receives the phase difference information and the frequency shift information.

S1407 may alternatively be: The UE sends phase difference information, time difference information corresponding to the phase difference information, and frequency shift information to the LMF. Correspondingly, the LMF receives the phase difference information, the time difference information corresponding to the phase difference information, and the frequency shift information.

For specific content of this step, refer to S705. For brevity, details are not described herein again.

S1408: The LMF calculates the angle of departure.

It should be understood that the LMF may calculate, by using Formula 6 and/or Formula 11, the angle of departure based on the information received in S1407. The information may be at least one of the following: the phase information and the frequency shift information, the phase information, the time information, and the frequency shift information, the phase difference information and the frequency shift information, the phase difference information, the time difference information, and the frequency shift information, the compensated phase information, and the compensated phase difference information.

It should be further understood that the LMF may determine a location of the terminal device based on information about a plurality of angles of departure reported by the UE.

In this embodiment of this application, the UE may receive, by using a same antenna, the plurality of reference signals sent by using different antennas of the device 1410, and at least two of the plurality of reference signals are sent by using a same antenna of the device 1410. The UE may measure the phases of the received reference signals to determine the phase measurement results of the reference signals, perform frequency shift estimation based on the phase measurement results, and send the phase measurement results of the reference signals and frequency shift estimation results to the LMF, so that the LMF can determine the angle of departure based on the received information. Because a phase error caused by a frequency shift is considered during determining of the angle of departure, the angle of departure obtained through calculation has higher precision. Further, because there may be the plurality of devices 1410, there may also be a plurality of determined angles of departure, so that the LMF may determine the location of the terminal device based on the plurality of angles of departure.

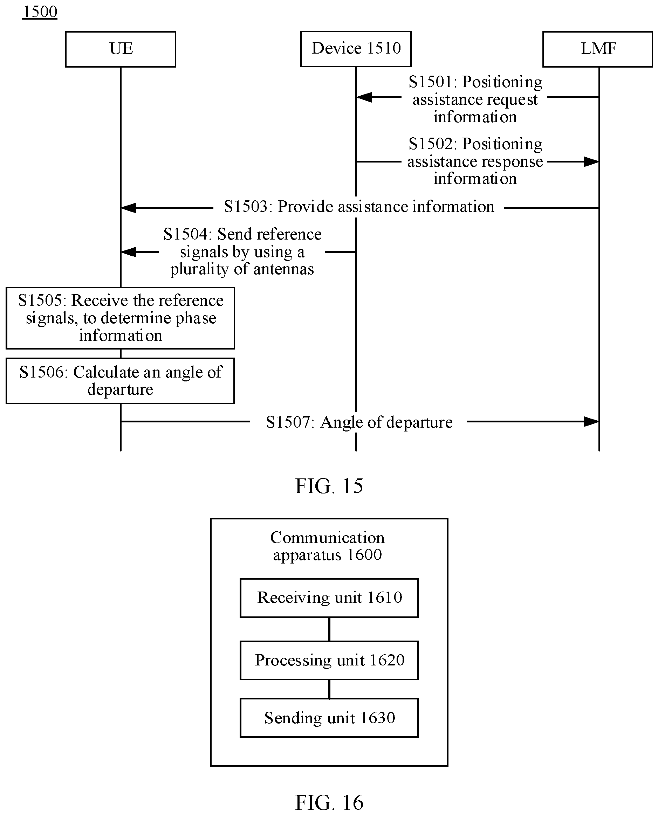

FIG. 15 is a schematic flowchart of another communication method according to an embodiment of this application. The method 1500 shown in FIG. 15 may include step S1501 to step S1507 and relates to a cellular or sidelink positioning scenario in which a device 1510 (an example of the first device in FIG. 12) sends reference signals by using a plurality of antennas, and at least one of the antennas is repeatedly used to send the reference signal at least once. UE (an example of the terminal device in FIG. 12) measures phases of the received reference signals by using a same antenna, to determine phase measurement results of the reference signals, determines an angle of departure based on the phase measurement results of the reference signals, and sends the angle of departure to an LMF (an example of the second device in FIG. 12). In this application, there may be a plurality of devices 1510, and a location of the UE may be uniquely determined via the plurality of devices 1510. The following describes in detail the steps in the method 1500.

S1501: The LMF sends positioning assistance request information to the device 1510, and correspondingly, the device 1510 receives the positioning assistance request information.

S1502: The device 1510 sends positioning assistance response information to the LMF, and correspondingly, the LMF receives the positioning assistance response information.

For S1501 and S1502, refer to S1401 and S1402. For brevity, details are not described herein again.

S1503: The LMF sends assistance information to the UE, and correspondingly, the UE receives the assistance information sent by the LMF.

The assistance information indicates at least one of the following: total duration of the reference signals, duration of each reference signal, a quantity of reference signals, relative location information of an antenna in each gNB/TRP, and geographical location information of each gNB/TRP. In addition, the assistance information further indicates which reference signals are sent by using a same antenna.

For example, assistance information may directly indicate which reference signals are sent by using an antenna. For example, the configuration information indicates that a first reference signal and a third reference signal are sent by using a same antenna. The configuration information may indicate, based on identification information of the reference signals, which reference signals are sent by using a same antenna. In other words, the configuration information indicates identification information carried in the reference signals sent by using the same antenna. The identification information may be, for example, one or more of the following content: an antenna identifier, a port identifier, a reference signal ID identifier, a reference signal set ID identifier, a reference signal resource ID, and a reference signal resource set ID. In addition, the reference signal may carry an antenna identifier that identifies sending of the reference signal or a port identifier that identifies sending of the reference signal.

S1504: The device 1510 sends the reference signals by using the plurality of antennas.

It should be understood that at least one of the plurality of antennas of the device 1510 works twice or more, that is, the at least one antenna is used to send the reference signals at least twice.

For related content of this step, refer to S501 and S901. Details are not described herein again.

S1505: The UE receives the reference signals, to determine phase information.

It should be understood that the UE receives and measures a phase of each reference signal by using a same antenna, to determine phase information.

For example, a first phase obtained by the UE by measuring a phase of the first reference signal at a moment $t_1$ is $\varphi_1(t_1)$, a second phase obtained by the UE by measuring a phase of a second reference signal at a moment $t_2$ is $\varphi_2(t_2)$, and a third phase obtained by the UE by measuring a phase of the third reference signal at a moment $t_3$ is $\varphi_1(t_3)$.

S1506: The UE calculates the angle of departure.

It should be understood that the UE may calculate, by using Formula 6 and Formula 10, the angle of departure based on at least one of the following content obtained through measurement: the phase information, the phase information and time information, phase difference information, the phase difference information and time difference information, the phase information and frequency shift information, the phase information, the time information, and the frequency shift information, the phase difference information and the frequency shift information, the phase difference information, the time difference information, and the frequency shift information, compensated phase information, and compensated phase difference information.

For specific content of this step, refer to S605. For brevity, details are not described herein again.

S1507: The UE sends the calculated angle of departure to the LMF, and correspondingly, the LMF receives the angle of departure sent by the UE.

It should be understood that the LMF may determine a location of the terminal device based on information about a plurality of angles of departure reported by the UE.

In this embodiment of this application, the UE may receive, by using a same antenna, the plurality of reference signals sent by using different antennas of the device 1510, and at least two of the plurality of reference signals are sent by using a same antenna of the device 1510. The UE may measure the phases of the received reference signals to determine the phase measurement results of the reference signals, determine the angle of departure based on the phase measurement results of the reference signals, and send the angle of departure to the LMF. Because a phase error caused by a frequency shift is considered during determining of the angle of departure, the angle of departure obtained through calculation has higher precision. Further, because there may be the plurality of devices 1510, there may also be a plurality of determined angles of departure, so that the LMF may determine the location of the terminal device based on the plurality of angles of departure.

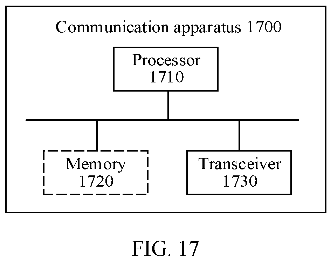

The foregoing describes the method embodiments of embodiments of this application in detail with reference to FIG. 1 to FIG. 15. The following describes apparatus embodiments of embodiments of this application in detail with reference to FIG. 16 and FIG. 17. It should be understood that descriptions of the method embodiments correspond to descriptions of the apparatus embodiments. Therefore, for a part that is not described in detail, refer to the foregoing method embodiments.

FIG. 16 is a schematic block diagram of a communication apparatus according to this application, including a receiving unit 1610 and a sending unit 1630. Optionally, the communication apparatus may be configured to implement steps or procedures performed by the terminal device in the foregoing method embodiments. For example, the communication apparatus may be the terminal device, or may be a chip or a circuit in the terminal device. The receiving unit 1610 is configured to perform a receiving-related operation of the terminal device in the foregoing method embodiments. For example, the receiving unit 1610 is configured to receive a first reference signal, a second reference signal, a third reference signal, and the like. The sending unit 1630 is configured to perform a sending-related operation of the terminal device in the foregoing method embodiments. For example, the sending unit 1630 is configured to send first information, and the like. Optionally, the communication apparatus further includes a processing unit 1620. The processing unit 1620 is configured to perform a processing-related operation of the terminal device in the foregoing method embodiments. For example, the processing unit 1620 is configured to determine phase measurement results of the first reference signal, the second reference signal, and the third reference signal, and the like. Optionally, the receiving unit 1610 and the sending unit 1630 may alternatively be integrated into a transceiver unit that has both a receiving function and a sending function. This is not limited herein.

Optionally, the communication apparatus may be configured to implement steps or procedures performed by the first device in the foregoing method embodiments. For example, the communication apparatus may be the first device, or may be a chip or a circuit in the first device. The receiving unit 1610 is configured to perform a receiving-related operation of the first device in the foregoing method embodiments. For example, the receiving unit 1610 is configured to receive first information, and the like. The sending unit 1630 is configured to perform a sending-related operation of the terminal device in the foregoing method embodiments. For example, the sending unit 1630 is configured to send a first reference signal, a second reference signal, a third reference signal, and the like. The processing unit 1620 is configured to perform a processing-related operation of the first device in the foregoing method embodiments. For example, the processing unit 1620 is configured to determine a direction angle based on the first information, and the like. Optionally, the sending unit 1630 and the receiving unit 1610 may also be integrated into a transceiver unit that has both a receiving function and a sending function. This is not limited herein.

Optionally, the communication apparatus may be configured to implement steps or procedures performed by the positioning management device in the foregoing method embodiments. For example, the communication apparatus may be the positioning management device, or may be a chip or a circuit in the positioning management device. The receiving unit 1610 is configured to perform a receiving-related operation of the positioning management device in the foregoing method embodiments. For example, the receiving unit 1610 is configured to receive positioning assistance response information sent by a base station. The processing unit 1620 is configured to perform a processing-related operation of the positioning management device in the foregoing method embodiments. For example, the processing unit 1620 is configured to determine a direction angle based on the first information, and the like. The sending unit 1630 is configured to perform a sending-related operation of the positioning management device in the foregoing method embodiments. For example, the sending unit 1630 is configured to send a positioning assistance request information, and the like. Optionally, the sending unit 1630 and the receiving unit 1610 may also be integrated into a transceiver unit that has both a receiving function and a sending function. This is not limited herein.

FIG. 17 is a diagram of a structure of a communication apparatus according to this application, including a processor 1710. The processor 1710 is coupled to a memory 1720. The memory 1720 is configured to store a computer program or instructions and/or data. The processor 1710 is configured to execute the computer program or the instructions stored in the memory 1720, or read the data stored in the memory 1720, to perform the methods in the foregoing method embodiments.

Optionally, there are one or more processors 1710.

Optionally, there are one or more memories 1720.

Optionally, the memory 1720 may be integrated with the processor 1710, or the memory 1720 and the processor 1710 are separately disposed.

Optionally, as shown in FIG. 17, the communication apparatus further includes a transceiver 1730. The transceiver 1730 is configured to receive and/or send a signal. For example, the processor 1710 is configured to control the transceiver 1730 to receive and/or send a signal.

Optionally, the communication apparatus may be configured to perform operations performed by the terminal device in the foregoing method embodiments. For example, the processor 1710 is configured to execute the computer program or the instructions stored in the memory 1720, to implement related operations of the terminal device in the foregoing method embodiments. For example, the transceiver 1730 may be configured to perform a receiving operation of the terminal device in S501 shown in FIG. 5, and may be further configured to perform a sending operation of the terminal device in S502. The processor 1710 is configured to perform a processing step of the terminal device side in this embodiment of this application, for example, configured to perform a processing operation of determining phase information based on a measured phase of a reference signal. It should be understood that the communication apparatus shown in FIG. 17 may perform operations performed by the terminal devices in FIG. 5 and FIG. 12, the terminal device 610 in FIG. 6, the terminal device 710 in FIG. 7, the terminal device 810 in FIG. 8, the terminal device 910 in FIG. 9, the terminal device 1010 in FIG. 10, the terminal device 1110 in FIG. 11, and the UE in FIG. 13 to FIG. 15.

Optionally, the communication apparatus may be configured to perform operations performed by the first device in the foregoing method embodiments. For example, the processor 1710 is configured to execute the computer program or the instructions stored in the memory 1720, to implement related operations of the first device in the foregoing method embodiments. For example, the transceiver 1730 may be configured to perform a sending operation of the first device in S501 shown in FIG. 5, and may be further configured to perform a receiving operation of the first device in S502. The processor 1710 is configured to perform a processing step of the first device side in this embodiment of this application, for example, configured to perform a processing operation of calculating an angle of departure based on phase information and time information. It should be understood that the communication apparatus shown in FIG. 17 may perform operations performed by the first devices in FIG. 5 and FIG. 12, the terminal device 620 in FIG. 6, the terminal device 720 in FIG. 7, the terminal device 820 in FIG. 8, the terminal device 920 in FIG. 9, the terminal device 1020 in FIG. 10, the terminal device 1120 in FIG. 11, the device 1310 in FIG. 13, the device 1410 in FIG. 14, and the device 1510 in FIG. 15.

Optionally, the communication apparatus may be configured to perform operations performed by the positioning management device in the foregoing method embodiments. For example, the processor 1710 is configured to execute the computer program or the instructions stored in the memory 1720, to implement related operations of the positioning management device in the foregoing method embodiments. For example, the transceiver 1730 may be configured to perform a sending operation of the LMF in S1303 shown in FIG. 13, and may be further configured to perform a receiving operation of the LMF in S1307. The processor 1710 is configured to perform a processing step of the LMF in this embodiment of this application, for example, configured to perform an operation of calculating an angle of departure in S1308 shown in FIG. 13.

It should be understood that FIG. 17 is merely an example rather than a limitation, and the communication apparatus including the processor, the memory, and the transceiver may not depend on the structure shown in FIG. 17.

In addition, this application further provides a chip, and the chip includes a processor. A memory configured to store a computer program is disposed independently of the chip, and the processor is configured to execute the computer program stored in the memory, so that an operation and/or processing performed by the terminal device, the first device, or the positioning management device in any method embodiment are/is performed.

Further, the chip may further include a communication interface. The communication interface may be an input/output interface, or may be an interface circuit, or the like. Further, the chip may include a memory.

The chip in this embodiment of this application may be a field programmable gate array (field programmable gate array, FPGA), an application-specific integrated circuit (application-specific integrated circuit, ASIC), a system-on-chip (system-on-chip, SoC), a CPU, a network processor (network processor, NP), a digital signal processor (digital signal processor, DSP), a microcontroller (microcontroller unit, MCU), a programmable controller (programmable logic device, PLD), another programmable logic device, a discrete gate or a transistor logic device, a discrete hardware component, or another integrated chip.

This application further provides a computer program product. The computer program product includes computer program code. When the computer program code is run on a computer, the computer is enabled to perform the method in any one of the embodiments shown in FIG. 5 to FIG. 15.

This application further provides a computer-readable medium. The computer-readable medium stores program code. When the program code is run on a computer, the computer is enabled to perform the method in any one of the embodiments shown in FIG. 5 to FIG. 15.

In an implementation process, steps in the foregoing methods may be completed by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments may be completed by using a hardware integrated logical circuit in the processor, or by using instructions in a form of software. A general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification aims to include but is not limited to these and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division or may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device and comprises:

    receiving a first reference signal, a second reference signal, and a third reference signal; and
    sending first information, wherein the first information indicates a direction angle, and the first information is determined based on phase measurement results of the first reference signal, the second reference signal, and the third reference signal, wherein
    the first reference signal and the third reference signal are received by using a first antenna, the second reference signal is received by using a second antenna, and the first antenna and the second antenna are different antennas of the terminal device; or
    the first reference signal and the third reference signal are sent by using a third antenna, the second reference signal is sent by using a fourth antenna, and the third antenna and the fourth antenna are different antennas of a device that sends the first reference signal, the second reference signal, and the third reference signal.

2. The method according to claim 1, wherein

    the first information comprises phase information, and the phase information indicates a first phase, a second phase, and a third phase, wherein
    the first phase is a phase that is of the first reference signal and that is obtained at a first moment;
    the second phase is a phase that is of the second reference signal and that is obtained at a second moment; and
    the third phase is a phase that is of the third reference signal and that is obtained at a third moment.

3. The method according to claim 2, wherein
the first information further comprises time information, and the time information indicates the first moment corresponding to the first phase, the second moment corresponding to the second phase, and the third moment corresponding to the third phase.

4. The method according to claim 1, wherein

   the first information comprises phase difference information, and the phase difference information indicates at least one of the following: a first phase difference and a second phase difference, the first phase difference and a third phase difference, and the second phase difference and the third phase difference, wherein
   the first phase difference is a phase difference between a first phase and a second phase;
   the second phase difference is a phase difference between the first phase and a third phase;
   the third phase difference is a phase difference between the second phase and the third phase;
   the first phase is a phase that is of the first reference signal and that is obtained at a first moment;
   the second phase is a phase that is of the second reference signal and that is obtained at a second moment; and
   the third phase is a phase that is of the third reference signal and that is obtained at a third moment.

5. The method according to claim 4, wherein

   the first information further comprises time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference, wherein
   the first time difference is a difference between the first moment and the second moment;
   the second time difference is a difference between the first moment and the third moment; and
   the third time difference is a difference between the second moment and the third moment.

6. The method according to any one of claims 2 to 5, wherein
   the first information further comprises frequency shift information, and the frequency shift information indicates a difference between a signal frequency of the terminal device and each of frequencies of the first reference signal, the second reference signal, and the third reference signal that are received by the terminal device.

7. The method according to claim 1, wherein

   the first information comprises compensated phase information or compensated phase difference information;
   the compensated phase information indicates at least one of the following: a first phase and a compensated second phase, a second phase and a compensated first phase, the second phase and a compensated third phase, and a third phase and the compensated second phase; and
   the compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase, wherein
   the compensated first phase is a phase obtained by compensating the first phase based on the phase measurement result of the first reference signal and the phase measurement result of the third reference signal;
   the compensated second phase is a phase obtained by compensating the second phase based on the phase measurement result of the first reference signal and the phase measurement result of the third reference signal;
   the compensated third phase is a phase obtained by compensating the third phase based on the phase measurement result of the first reference signal and the phase measurement result of the third reference signal;
   the phase measurement result of the first reference signal comprises the first phase and a first moment, and the first phase is a phase that is of the first reference signal and that is obtained at the first moment;
   the phase measurement result of the second reference signal comprises the second phase and a second moment, and the second phase is a phase that is of the second reference signal and that is obtained at the second moment; and
   the phase measurement result of the third reference signal comprises the third phase and a third moment, and the third phase is a phase that is of the third reference signal and that is obtained at the third moment.

8. The method according to claim 1, wherein

the first information comprises the direction angle, and the direction angle is an angle of arrival or an angle of departure; and

the direction angle is determined based on phase information, and the phase information indicates a first phase, a second phase, and a third phase, wherein

the first phase is a phase that is of the first reference signal and that is obtained at a first moment;

the second phase is a phase that is of the second reference signal and that is obtained at a second moment; and

the third phase is a phase that is of the third reference signal and that is obtained at a third moment.

9. The method according to claim 1, wherein

the first information comprises the direction angle, and the direction angle is an angle of arrival or an angle of departure; and

the direction angle is determined based on phase information and time information, the phase information indicates a first phase, a second phase, and a third phase, and the time information indicates a first moment corresponding to the first phase, a second moment corresponding to the second phase, and a third moment corresponding to the third phase, wherein

the first phase is a phase that is of the first reference signal and that is obtained at the first moment;

the second phase is a phase that is of the second reference signal and that is obtained at the second moment; and

the third phase is a phase that is of the third reference signal and that is obtained at the third moment.

10. The method according to claim 1, wherein

the first information comprises the direction angle, and the direction angle is an angle of arrival or an angle of departure; and

the direction angle is determined based on phase difference information, and the phase difference information indicates at least one of the following: a first phase difference and a second phase difference, the first phase difference and a third phase difference, and the second phase difference and the third phase difference, wherein

the first phase difference is a phase difference between a first phase and a second phase;

the second phase difference is a phase difference between the first phase and a third phase;

the third phase difference is a phase difference between the second phase and the third phase;

the first phase is a phase that is of the first reference signal and that is obtained at a first moment;

the second phase is a phase that is of the second reference signal and that is obtained at a second moment; and

the third phase is a phase that is of the third reference signal and that is obtained at a third moment.

11. The method according to claim 1, wherein

the first information comprises the direction angle, and the direction angle is an angle of arrival or an angle of departure;

the direction angle is determined based on phase difference information and time difference information, and the phase difference information indicates at least one of the following: a first phase difference and a second phase difference, the first phase difference and a third phase difference, and the second phase difference and the third phase difference; and

the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference, wherein

the first phase difference is a phase difference between a first phase and a second phase;

the second phase difference is a phase difference between the first phase and a third phase;

the third phase difference is a phase difference between the second phase and the third phase;

the first phase is a phase that is of the first reference signal and that is obtained at a first moment;

the second phase is a phase that is of the second reference signal and that is obtained at a second moment;

the third phase is a phase that is of the third reference signal and that is obtained at a third moment;

the first time difference is a difference between the first moment and the second moment;

the second time difference is a difference between the first moment and the third moment; and

the third time difference is a difference between the second moment and the third moment.

**12.** The method according to claim 1, wherein

the first information comprises the direction angle, and the direction angle is an angle of arrival or an angle of departure; and
the direction angle is determined based on phase information and frequency shift information, wherein
the phase information indicates a first phase, a second phase, and a third phase, the first phase is a phase that is of the first reference signal and that is obtained at a first moment, the second phase is a phase that is of the second reference signal and that is obtained at a second moment, and the third phase is a phase that is of the third reference signal and that is obtained at a third moment; and
the frequency shift information indicates a difference between a signal frequency of the terminal device and each of frequencies of the first reference signal, the second reference signal, and the third reference signal that are received by the terminal device.

**13.** The method according to claim 1, wherein

the first information comprises the direction angle, and the direction angle is an angle of arrival or an angle of departure; and
the direction angle is determined based on phase information, time information, and frequency shift information, wherein
the phase information indicates a first phase, a second phase, and a third phase, the first phase is a phase that is of the first reference signal and that is obtained at a first moment, the second phase is a phase that is of the second reference signal and that is obtained at a second moment, and the third phase is a phase that is of the third reference signal and that is obtained at a third moment;
the time information indicates the first moment corresponding to the first phase, the second moment corresponding to the second phase, and the third moment corresponding to the third phase; and
the frequency shift information indicates a difference between a signal frequency of the terminal device and each of frequencies of the first reference signal, the second reference signal, and the third reference signal that are received by the terminal device.

**14.** The method according to claim 1, wherein

the first information comprises the direction angle, and the direction angle is an angle of arrival or an angle of departure;
the direction angle is determined based on phase difference information and frequency shift information;
the phase difference information indicates at least one of the following: a first phase difference and a second phase difference, the first phase difference and a third phase difference, and the second phase difference and the third phase difference; and
the frequency shift information indicates a difference between a signal frequency of the terminal device and each of frequencies of the first reference signal, the second reference signal, and the third reference signal that are received by the terminal device, wherein
the first phase difference is a phase difference between a first phase and a second phase;
the second phase difference is a phase difference between the first phase and a third phase;
the third phase difference is a phase difference between the second phase and the third phase;
the first phase is a phase that is of the first reference signal and that is obtained at a first moment;
the second phase is a phase that is of the second reference signal and that is obtained at a second moment; and
the third phase is a phase that is of the third reference signal and that is obtained at a third moment.

**15.** The method according to claim 1, wherein

the first information comprises the direction angle, and the direction angle is an angle of arrival or an angle of departure;
the direction angle is determined based on phase difference information, time difference information, and frequency shift information;
the phase difference information indicates at least one of the following: a first phase difference and a second phase difference, the first phase difference and a third phase difference, and the second phase difference and the third phase difference;
the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference; and

the frequency shift information indicates a difference between a signal frequency of the terminal device and each of frequencies of the first reference signal, the second reference signal, and the third reference signal that are received by the terminal device, wherein

the first phase difference is a phase difference between a first phase and a second phase;

the second phase difference is a phase difference between the first phase and a third phase;

the third phase difference is a phase difference between the second phase and the third phase;

the first phase is a phase that is of the first reference signal and that is obtained at a first moment;

the second phase is a phase that is of the second reference signal and that is obtained at a second moment;

the third phase is a phase that is of the third reference signal and that is obtained at a third moment;

the first time difference is a difference between the first moment and the second moment;

the second time difference is a difference between the first moment and the third moment; and

the third time difference is a difference between the second moment and the third moment.

16. The method according to claim 1, wherein

the first information comprises the direction angle, and the direction angle is an angle of arrival or an angle of departure;

the direction angle is determined based on compensated phase information or compensated phase difference information;

the compensated phase information indicates at least one of the following: a first phase and a compensated second phase, a second phase and a compensated first phase, the second phase and a compensated third phase, and a third phase and the compensated second phase; and

the compensated phase difference information indicates at least one of the following: a phase difference between the first phase and the compensated second phase, a phase difference between the second phase and the compensated first phase, a phase difference between the second phase and the compensated third phase, and a phase difference between the third phase and the compensated second phase, wherein

the compensated first phase is a phase obtained by compensating the first phase based on the phase measurement result of the first reference signal and the phase measurement result of the third reference signal;

the compensated second phase is a phase obtained by compensating the second phase based on the phase measurement result of the first reference signal and the phase measurement result of the third reference signal;

the compensated third phase is a phase obtained by compensating the third phase based on the phase measurement result of the first reference signal and the phase measurement result of the third reference signal;

the phase measurement result of the first reference signal comprises the first phase and a first moment, and the first phase is a phase that is of the first reference signal and that is obtained at the first moment;

the phase measurement result of the second reference signal comprises the second phase and a second moment, and the second phase is a phase that is of the second reference signal and that is obtained at the second moment; and

the phase measurement result of the third reference signal comprises the third phase and a third moment, and the third phase is a phase that is of the third reference signal and that is obtained at the third moment.

17. A communication method, comprising:

receiving first information, wherein the first information indicates a direction angle, and the first information is determined based on phase measurement results of a first reference signal, a second reference signal, and a third reference signal; and

determining the direction angle based on the first information, wherein

the first reference signal and the third reference signal are sent by using a third antenna, the second reference signal is sent by using a fourth antenna, and the third antenna and the fourth antenna are different antennas of a device that sends the first reference signal, the second reference signal, and the third reference signal; or

the first reference signal and the third reference signal are received by using a first antenna, the second reference signal is received by using a second antenna, and the first antenna and the second antenna are different antennas of a device that receives the first reference signal, the second reference signal, and the third reference signal.

18. The method according to claim 17, wherein before the receiving first information, the method further comprises: sending the first reference signal, the second reference signal, and the third reference signal.

19. The method according to claim 17 or 18, wherein

the first information comprises phase information, and the phase information indicates a first phase, a second phase, and a third phase, wherein
the first phase is a phase that is of the first reference signal and that is obtained at a first moment;
the second phase is a phase that is of the second reference signal and that is obtained at a second moment; and
the third phase is a phase that is of the third reference signal and that is obtained at a third moment.

20. The method according to claim 19, wherein
the first information further comprises time information, and the time information indicates the first moment corresponding to the first phase, the second moment corresponding to the second phase, and the third moment corresponding to the third phase.

21. The method according to claim 17 or 18, wherein

the first information comprises phase difference information, and the phase difference information indicates at least one of the following: a first phase difference and a second phase difference, the first phase difference and a third phase difference, and the second phase difference and the third phase difference, wherein
the first phase difference is a phase difference between a first phase and a second phase;
the second phase difference is a phase difference between the first phase and a third phase;
the third phase difference is a phase difference between the second phase and the third phase;
the first phase is a phase that is of the first reference signal and that is obtained at a first moment;
the second phase is a phase that is of the second reference signal and that is obtained at a second moment; and
the third phase is a phase that is of the third reference signal and that is obtained at a third moment.

22. The method according to claim 21, wherein

the first information further comprises time difference information, and the time difference information indicates at least one of the following: a first time difference corresponding to the first phase difference and a second time difference corresponding to the second phase difference, the first time difference corresponding to the first phase difference and a third time difference corresponding to the third phase difference, and the second time difference corresponding to the second phase difference and the third time difference corresponding to the third phase difference, wherein
the first time difference is a difference between the first moment and the second moment;
the second time difference is a difference between the first moment and the third moment; and
the third time difference is a difference between the second moment and the third moment.

23. The method according to any one of claims 19 to 22, wherein
the first information further comprises frequency shift information, and the frequency shift information indicates a difference between a signal frequency of the device and each of frequencies of the first reference signal, the second reference signal, and the third reference signal that are received by the device.

24. The method according to claim 17 or 18, wherein

the first information comprises compensated phase information or compensated phase difference information; and
the compensated phase difference information indicates at least one of the following: a phase difference between a first phase and a compensated second phase, a phase difference between a second phase and a compensated first phase, a phase difference between the second phase and a compensated third phase, and a phase difference between a third phase and the compensated second phase, wherein
the compensated first phase is a phase obtained by compensating the first phase based on the phase measurement result of the first reference signal and the phase measurement result of the third reference signal;
the compensated second phase is a phase obtained by compensating the second phase based on the phase measurement result of the first reference signal and the phase measurement result of the third reference signal;
the compensated third phase is a phase obtained by compensating the third phase based on the phase measurement result of the first reference signal and the phase measurement result of the third reference signal;
the phase measurement result of the first reference signal comprises the first phase and a first moment, and the first phase is a phase that is of the first reference signal and that is obtained at the first moment;

the phase measurement result of the second reference signal comprises the second phase and a second moment, and the second phase is a phase that is of the second reference signal and that is obtained at the second moment; and

the phase measurement result of the third reference signal comprises the third phase and a third moment, and the third phase is a phase that is of the third reference signal and that is obtained at the third moment.

25. A communication apparatus, comprising a module configured to perform the method according to any one of claims 1 to 16 or the method according to any one of claims 17 to 24.

26. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 16 or the method according to any one of claims 17 to 24.

27. A chip, comprising a processor, wherein the processor is configured to read and execute a computer program stored in a memory, to perform the method according to any one of claims 1 to 16 or the method according to any one of claims 17 to 24.

28. A computer-readable storage medium, wherein the computer-readable storage medium stores instructions, and when the instructions are run on a computer, the computer is enabled to perform the method according to any one of claims 1 to 16 or the method according to any one of claims 17 to 24.

<u>100</u>

FIG. 1

<u>200</u>

FIG. 2

FIG. 3

Device 420

Reference
signal

$\theta$

Antenna 1

$d$

Antenna 2

Antenna 3

Send the reference signal
by switching a switch

Device 410

FIG. 4

500

```
┌─────────────────┐                              ┌─────────────────┐
│ Terminal device │                              │   First device  │
└─────────────────┘                              └─────────────────┘
         │                                                 │
         │◄──── S501: Send at least three reference signals ┤
         │                                                 │
         │                                                 │
         ├──────── S502: First information ───────────────►│
         │                                                 │
         │                                                 │
         │                                                 │
```

FIG. 5

600

```
┌─────────────────┐                              ┌─────────────────┐
│ Terminal device │                              │ Terminal device │
│      610        │                              │      620        │
└─────────────────┘                              └─────────────────┘
         │                                                 │
         ├──── S601: Request information of reference signals ───►│
         │                                                 │
         │◄──────── S602: Configuration information ───────┤
         │            of the reference signals             │
         │                                                 │
         │◄──── S603: Send at least three reference signals ┤
         │         based on the configuration information   │
         │                                                 │
┌────────────────────────┐                                 │
│ S604: Receive the reference                              │
│ signals by using a plurality of                          │
│ antennas, to determine phase                             │
│ information                                              │
└────────────────────────┘                                 │
         │                                                 │
         ├──── S605: Phase information and time information ──────►│
         │      corresponding to the phase information      │
         │                                                 │
         │                              ┌──────────────────────┐
         │                              │ S606: Calculate an angle of
         │                              │ arrival              │
         │                              └──────────────────────┘
         │                                                 │
```

FIG. 6

700

FIG. 7

800

```
┌─────────────────┐                              ┌─────────────────┐
│ Terminal device │                              │ Terminal device │
│      810        │                              │      820        │
└─────────────────┘                              └─────────────────┘
         │                                                 │
         │─── S801: Request information of reference signals ──▶│
         │                                                 │
         │◀── S802: Configuration information ─────────────│
         │        of the reference signals                 │
         │                                                 │
         │◀── S803: Send at least three reference signals ──│
         │    based on the configuration information        │
┌────────┴──────────────────┐                              │
│ S804: Receive the reference signals                      │
│ by using a plurality of antennas, to                     │
│    determine phase information                           │
└────────┬──────────────────┘                              │
┌────────┴──────────────────┐                              │
│ S805: Calculate an angle of arrival                      │
└────────┬──────────────────┘                              │
         │                                                 │
         │─────── S806: Angle of arrival ─────────────────▶│
         │                                                 │
```

FIG. 8

900

| Terminal device 910 | | Terminal device 920 |

S901: Configuration information of reference signals

S902: Send the reference signals by using a plurality of antennas

S903: Receive the reference signals, to determine phase information

S904: Phase information and time information corresponding to the phase information

S905: Calculate an angle of departure

FIG. 9

1000

| Terminal device 1010 | | Terminal device 1020 |

S1001: Configuration information of reference signals

S1002: Send the reference signals by using a plurality of antennas

S1003: Receive the reference signals, to determine phase information

S1004: Phase information obtained through frequency shift compensation

S1005: Calculate an angle of departure

FIG. 10

1100

```
┌──────────────┐                                              ┌──────────────┐
│Terminal device│                                              │Terminal device│
│    1110       │                                              │    1120       │
└──────┬────────┘                                              └──────┬───────┘
       │◄──────── S1101: Configuration information ──────────────────│
       │                   of reference signals                      │
       │                                                             │
       │◄──────── S1102: Send the reference signals ─────────────────│
       │            by using a plurality of antennas                 │
┌──────┴────────────────┐                                            │
│S1103: Receive the     │                                            │
│reference signals, to  │                                            │
│determine phase        │                                            │
│information            │                                            │
└──────┬────────────────┘                                            │
       │◄────── S1104: Positioning assistance information ───────────│
┌──────┴────────────────┐                                            │
│S1105: Calculate an    │                                            │
│angle of departure     │                                            │
└──────┬────────────────┘                                            │
       │────────── S1106: Angle of departure ──────────────────────►│
       │                                                             │
```

FIG. 11

1200

```
┌──────────────┐          ┌──────────────┐          ┌──────────────┐
│Terminal device│          │ First device │          │Second device │
└──────┬────────┘          └──────┬───────┘          └──────┬───────┘
       │◄─── S1201: Send at least ─│                        │
       │   three reference signals │                        │
       │──────── S1202: First information ─────────────────►│
       │                           │              ┌─────────┴──────────┐
       │                           │              │S1203: Determine a  │
       │                           │              │direction angle based│
       │                           │              │on the first        │
       │                           │              │information         │
       │                           │              └─────────┬──────────┘
```

FIG. 12

1300

| UE | Device 1310 | LMF |
|---|---|---|

S1301: Positioning assistance request information

S1302: Positioning assistance response information

S1303: Provide assistance information

S1304: Request location information

S1305: Send reference signals by using a plurality of antennas

S1306: Receive the reference signals, to determine phase information

S1307: Phase information and phase measurement time information

S1308: Calculate an angle of departure

FIG. 13

1400

FIG. 14

1500

| UE | Device 1510 | LMF |

S1501: Positioning assistance request information

S1502: Positioning assistance response information

S1503: Provide assistance information

S1504: Send reference signals by using a plurality of antennas

S1505: Receive the reference signals, to determine phase information

S1506: Calculate an angle of departure

S1507: Angle of departure

FIG. 15

Communication apparatus 1600

Receiving unit 1610

Processing unit 1620

Sending unit 1630

FIG. 16

FIG. 17

## INTERNATIONAL SEARCH REPORT

| International application No. |
| --- |
| **PCT/CN2023/082522** |

**A. CLASSIFICATION OF SUBJECT MATTER**

G01S 3/00(2006.01)i

According to International Patent Classification (IPC) or to both national classification and IPC

**B. FIELDS SEARCHED**

Minimum documentation searched (classification system followed by classification symbols)

IPC:G01S H04W

Documentation searched other than minimum documentation to the extent that such documents are included in the fields searched

Electronic data base consulted during the international search (name of data base and, where practicable, search terms used)

CNTXT, ENTXTC, VEN, 万方, WANFANG, CNKI, 百度学术, BAIDU SCHOLAR: 方向角, 方位角, 离开角, 到达角, 波达角, 多个, 天线, 阵列, 测角, 相同, 不同, 切换, 频率, 偏移, 不一致, 相位, 误差, DOA, AOA, angle, multiple, antenna, frequency, offset, error, phase

**C. DOCUMENTS CONSIDERED TO BE RELEVANT**

| Category* | Citation of document, with indication, where appropriate, of the relevant passages | Relevant to claim No. |
| --- | --- | --- |
| X | CN 113923087 A (ZHEJIANG LAB) 11 January 2022 (2022-01-11)<br>description, paragraphs 2-18 and 31-47 | 1-28 |
| A | CN 112639501 A (BEIJING XIAOMI MOBILE SOFTWARE CO., LTD.) 09 April 2021 (2021-04-09)<br>entire document | 1-28 |
| A | CN 114026927 A (HUAWEI TECHNOLOGIES CO., LTD.) 08 February 2022 (2022-02-08)<br>entire document | 1-28 |
| A | CN 111965597 A (HUAZHONG UNIVERSITY OF SCIENCE AND TECHNOLOGY) 20 November 2020 (2020-11-20)<br>entire document | 1-28 |
| A | WO 2022006267 A2 (QUALCOMM INC.) 06 January 2022 (2022-01-06)<br>entire document | 1-28 |
| A | CN 111965597 A (HUAZHONG UNIVERSITY OF SCIENCE AND TECHNOLOGY) 20 November 2020 (2020-11-20)<br>entire document | 1-28 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 July 2023** | **16 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082522**

| Patent document cited in search report | | | Publication date (day/month/year) | Patent family member(s) | | | Publication date (day/month/year) |
|---|---|---|---|---|---|---|---|
| CN | 113923087 | A | 11 January 2022 | None | | | |
| CN | 112639501 | A | 09 April 2021 | None | | | |
| CN | 114026927 | A | 08 February 2022 | None | | | |
| CN | 111965597 | A | 20 November 2020 | None | | | |
| WO | 2022006267 | A2 | 06 January 2022 | KR | 20230084102 | A | 12 June 2023 |
| | | | | EP | 4176280 | A2 | 10 May 2023 |
| | | | | US | 2022014327 | A1 | 13 January 2022 |
| | | | | WO | 2022006267 | A3 | 24 February 2022 |
| | | | | TW | 202207720 | A | 16 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210309358

- CN 202210417185